# EUROPEAN PATENT APPLICATION

(11) **EP 4 697 679 A2**
(43) Date of publication of application: **18.02.2026**
(21) Application number: 25204312.0
(22) Date of filing: 30.04.2021
(51) Int. Cl.: H04L 67/14

(54) **PROCEDURES FOR TRIGGERING AND UPDATING TELE-OPERATED DRIVING AT V2X APPLICATION SERVER**

(30) Priority: 08.05.2020 US 202063022027 P
(62) Divisional of application: 23211095.7
(71) Applicant: Telefonaktiebolaget LM Ericsson (publ), 164 83 Stockholm (SE)
(72) Inventor: EL ESSAILI, Ali, 52134 Herzogenrath (DE); CONDOLUCI, Massimo, 16480 Stockholm (SE); ZANG, Yunpeng, 52134 Herzogenrath (DE)
(74) Representative: Ericsson

(57) **Abstract**

A method performed by a first server for supporting session-oriented services for a vehicle includes transmitting a session-oriented service trigger request to a second server to initiate a session-oriented service for a client device. The method includes receiving a session-oriented service trigger response from the second server indicating whether or not the second server has an ability to initiate a session-oriented service with the client device. In other embodiments, a method performed by a second server communicatively connected to a network for supporting session-oriented services for a vehicle includes receiving a session-oriented service trigger request from a first server to initiate a session-oriented service for a client device. The method includes transmitting a session-oriented service trigger response to the first server indicating whether or not the second server has the ability to initiate a session-oriented service with the client device.

## Description

### TECHNICAL FIELD

The present disclosure relates generally to communications, and more particularly to communication methods and related devices and nodes supporting tele-operated driving (ToD).

### BACKGROUND

Related standardization work will now be described.

Tele-operated support (TeSo) is defined in 3GPP TR 22.886 (Clause 5.21) and the corresponding requirements are in clause 7.2.5 for remote driving. Normative requirements are in 3GPP SA1 TS 22.186, Service requirements for enhanced Vehicle to Everything (V2X) scenarios, V16.2.0, June 2019 (Clause 5.5).

5G Automotive Association (5GAA) has also specified Tele-operated Driving, Tele-operated Driving Support, and Tele-operated Driving for Automated Parking use cases and corresponding service level requirements in 5GAA T-190028, 5G Automotive Association; Working Group Use Cases and Technical Requirements; 5G Use Cases and Requirements - Wave 2.1; V1.0 (2019/01/30). In an on-going cross-working group work item, 5GAA is studying the communication solution and the operational architecture for the tele-operated driving services.

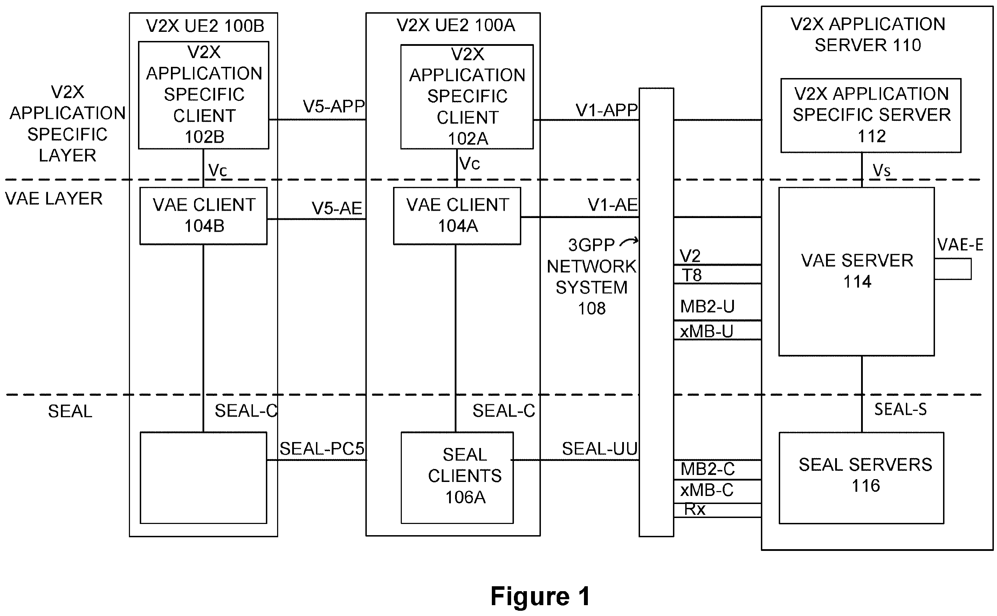

3GPP TS 23.286, Application layer support for V2X services; Functional architecture and information flows, V16.1.0, 06-2019 defines V2X application layer model for V2X communications over PC5 and Uu. The model is illustrated in Figure 1. Referring to Figure 1, the V2X application enabler (VAE) layer provide support information to the V2X application.

The V2X user equipment 1 (V2X UE1 100a) communicates with V2X application server 110 over V1 reference point. The V2X UE1 100a and V2X user equipment 2 (V2X UE2 100b) communicate over V5 reference point. V2X UE1 100a can also act as a UE-to-network relay, to enable V2X UE2 100b to access the V2X application server 110 over V1 reference point.

The V2X application layer functional entities for the V2X UE 100a, 100b and the V2X application server 110 are grouped into the V2X application specific layer and the VAE layer. The VAE layer offers the VAE capabilities to the V2X application specific layer. The V2X application layer functional model utilizes the service enabler architecture layer for verticals (SEAL) services as specified in 3GPP TS 23.434, Service Enabler Architecture Layer for Verticals; Functional architecture and information flows, V16.1.0, 06-2019.

The VAE server 114 is located in the VAE layer. The SEAL services utilized by VAE layer are location management, group management, configuration management, identity management, key management and network resource management. The V2X application specific layer consists of the V2X application specific functionalities.

It is noted that the 3GPP TS describes that functionalities of the V2X application specific layer are out of scope of the TS.

The V2X application server 112 includes the VAE server 114, the SEAL servers and the V2X application specific server 112. The VAE server 114 provides the V2X application layer support functions to the V2X application specific server 112 over Vs reference point.

The V2X UEs 100a, 100b include the VAE client 104a, 104b, the SEAL clients 106a, 106b and the V2X application specific client 102a, 102b. The VAE client 104a, 104b provides the V2X application layer support functions to the V2X application specific client 102a, 102b over Vc reference point.

It is noted that in some deployments, the client 106a, 106b and server 116 entities of SEAL can be part of VAE client 104a, 104b and VAE server 114 respectively.

The VAE client 104a, 104b acts as a VAL (vertical application layer) client for its interaction with the SEAL clients 106a, 106b as specified in 3GPP TS 23.434, Service Enabler Architecture Layer for Verticals; Functional architecture and information flows, V16.1.0, 06-2019. The VAE server 114 acts as a VAL server for its interaction with the SEAL servers 116 as specified in 3GPP TS 23.434, Service Enabler Architecture Layer for Verticals; Functional architecture and information flows, V16.1.0, 06-2019.

In the VAE layer, the VAE client 104a, 104b communicates with the VAE server 114 over V1-AE reference point. In the V2X application specific layer, the V2X application specific client 102a, 102b communicates with V2X application specific server over V1-APP reference point.

It is noted that the 3GPP TS describes that V1-APP reference point is out of scope of the TS.

In the VAE layer, the VAE client 104b of V2X UE2 100b communicates with VAE client 104a of V2X UE1 100a over V5-AE reference point. In the V2X application specific layer, the V2X application specific client 102b of V2X UE2 100b communicates with VAE client 104a of V2X UE1 100a over V5-APP reference point.

It is noted that the 3GPP TS describes that the V5-APP reference point is out of scope of the TS.

The following SEAL services for V2X applications are supported:
- Location management as specified in 3GPP TS 23.434, Service Enabler Architecture Layer for Verticals; Functional architecture and information flows, V16.1.0, 06-2019;
- Group management as specified in 3GPP TS 23.434, Service Enabler Architecture Layer for Verticals; Functional architecture and information flows, V16.1.0, 06-2019;
- Configuration management as specified in 3GPP TS 23.434, Service Enabler Architecture Layer for Verticals; Functional architecture and information flows, V16.1.0, 06-2019;
- Identity management as specified in 3GPP TS 23.434, Service Enabler Architecture Layer for Verticals; Functional architecture and information flows, V16.1.0, 06-2019;
- Key management as specified in 3GPP TS 23.434, Service Enabler Architecture Layer for Verticals; Functional architecture and information flows, V16.1.0, 06-2019; and
- Network resource management as specified in 3GPP TS 23.434, Service Enabler Architecture Layer for Verticals; Functional architecture and information flows, V16.1.0, 06-2019.

The VAE client 104a, 104b interacts with SEAL clients 106a, 106b over the SEAL-C reference point specified for each SEAL service. The VAE server 114 interacts with SEAL servers 116 over the SEAL-S reference point specified for each SEAL service. The interaction between the SEAL clients 106a, 106b is supported by SEAL-PC5 reference point specified for each SEAL service. The interaction between a SEAL client 106a, 106b and the corresponding SEAL server 116 is supported by SEAL-UU reference point specified for each SEAL service.

It is noted that the SEAL-C, SEAL-S, SEAL-PC5, SEAL-UU reference points for each SEAL service is specified in 3GPP TS 23.434, Service Enabler Architecture Layer for Verticals; Functional architecture and information flows, V16.1.0, 06-2019.

To support distributed VAE server deployments, the VAE server 114 interacts with another VAE server over VAE-E reference point.

V2X UE1 100a can also act as a UE-to-network relay:
- To enable VAE client 104b on V2X UE2 100b to access VAE server 114 over V1-AE reference point; and
- To enable V2X application specific client 102b on V2X UE2 100b to access V2X application specific server 112 over V1-APP reference point.

A V1-AE message can be sent over unicast, transparent multicast via xMB, transparent multicast via MB2. The non-transparent multicast via xMB is triggered by a V1-AE message. Multicast distribution can be supported by both transparent and non-transparent multicast modes.

The VAE server 114 interacts with the 3GPP network system 108 over V2, MB2, xMB, Rx and T8 reference points. The EPS and 5GS, 3GPP TR 23.764, Study on enhancements to application layer support for V2X services, V0.2.0, July 2019, are considered as the 3GPP network system.

### SUMMARY

Establishing session-oriented communication for services such as Tele-operated driving has been described in 3GPP TR 23.764. However, 3GPP TR 23.764 fails to describe the triggers for tele-operated driving support, i.e. when ToD is needed. This should happen before a ToD session is established. Also, the device and server APIs for initiating ToD support are not described. 3GPP TR 23.764 also does not allow a V2X application-specific server to request the VAE server to establish session-oriented communication for tele-operated driving session.

According to some embodiments of inventive concepts, a method performed by a first server for supporting session-oriented services for a vehicle is provided. The method includes transmitting a session-oriented service trigger request to a second server to initiate a session-oriented service for a client device. The method further includes receiving a session-oriented service trigger response from the second server indicating whether or not the second server has an ability to initiate a session-oriented service with the client device.

Analogous first server and computer program embodiments of inventive concepts are provided.

One advantage that can be realized with the inventive concepts described herein is that a V2X service provider (e.g., a road authority) can use the APIs and procedures to communicate with mobile network operators for establishing session-oriented services for a vehicle such as, for example, ToD support.

According to other embodiments of inventive concepts, a method performed by a second server for supporting session-oriented services for a vehicle is provided. The method includes receiving a session-oriented service trigger request from a first server to initiate a session-oriented service for a client device. The method further includes transmitting a session-oriented service trigger response to the first server indicating whether or not the second server has the ability to initiate a session-oriented service with the client device.

Analogous second server and computer program embodiments of inventive concepts are provided.

According to further embodiments of inventive concepts, a method performed by a vehicle to everything (V2X) application enabler (VAE) client of a computer device is provided. The method includes receiving a session-oriented service request from a second server, the session-oriented service request including an identity of the VAE client, an identity of a session, and a reporting configuration. The method includes transmitting a session-oriented service response to the second server indicating acceptance of the session-oriented service request. The method includes providing a session-oriented service establish notification to a V2X application-specific client.

Analogous VAE clients and computer programs are provided.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram illustrating a V2X application layer model according to some embodiments;
Figure 2 is a signaling diagram illustrating a procedure for triggering a VAE server to establish a session-oriented service with a VAE client according to some embodiments of inventive concepts;
Figure 3 is a signaling diagram illustrating a procedure for establishing a session-oriented service between the VAE server and the VAE client according to some embodiments of inventive concepts;
Figure 4 is a signaling diagram illustrating a procedure for providing session-oriented service update from the V2X application-specific server to the VAE server according to some embodiments of inventive concepts;
Figure 5 is a signaling diagram illustrating a procedure for updating a session-oriented service between the VAE server and the VAE client according to some embodiments of inventive concepts;
Figure 6 is a signaling diagram illustrating a procedure for updating a session-oriented service triggered by the VAE client according to some embodiments of inventive concepts;
Figure 7 is a signaling diagram illustrating a procedure for providing session-oriented service termination request from the V2X application-specific server to the VAE server according to some embodiments of inventive concepts;
Figure 8 is a signaling diagram illustrating a procedure for terminating a session-oriented service between the VAE server and the VAE client according to some embodiments of inventive concepts;
Figure 9 is a signaling diagram illustrating a procedure for terminating a session-oriented service triggered by the VAE client according to some embodiments of inventive concepts;
Figure 10 is a block diagram illustrating a V2X UE according to some embodiments of inventive concepts;
Figure 11 is a block diagram illustrating a VAE server according to some embodiments of inventive concepts;
Figure 12 is a block diagram illustrating a V2X application specific server according to some embodiments of inventive concepts;
Figures 13-15 are flow chart illustrating operations of a first server according to various embodiments of inventive concepts;
Figures 16-23 are flow charts illustrating operations of a second server according to various embodiments of inventive concepts;
Figures 24-28 are flow charts illustrating operations of a VAE client according to some various embodiments of inventive concepts;
Figure 29 is a block diagram of a wireless network in accordance with some embodiments;
Figure 30 is a block diagram of a user equipment in accordance with some embodiments
Figure 31 is a block diagram of a virtualization environment in accordance with some embodiments;
Figure 32 is a block diagram of a telecommunication network connected via an intermediate network to a host computer in accordance with some embodiments;
Figure 33 is a block diagram of a host computer communicating via a base station with a user equipment over a partially wireless connection in accordance with some embodiments;
Figure 34 is a block diagram of methods implemented in a communication system including a host computer, a base station and a user equipment in accordance with some embodiments;
Figure 35 is a block diagram of methods implemented in a communication system including a host computer, a base station and a user equipment in accordance with some embodiments;
Figure 36 is a block diagram of methods implemented in a communication system including a host computer, a base station and a user equipment in accordance with some embodiments; and
Figure 37 is a block diagram of methods implemented in a communication system including a host computer, a base station and a user equipment in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

In the description that follows, the terms "approval" and "acceptance" may be used interchangeably.

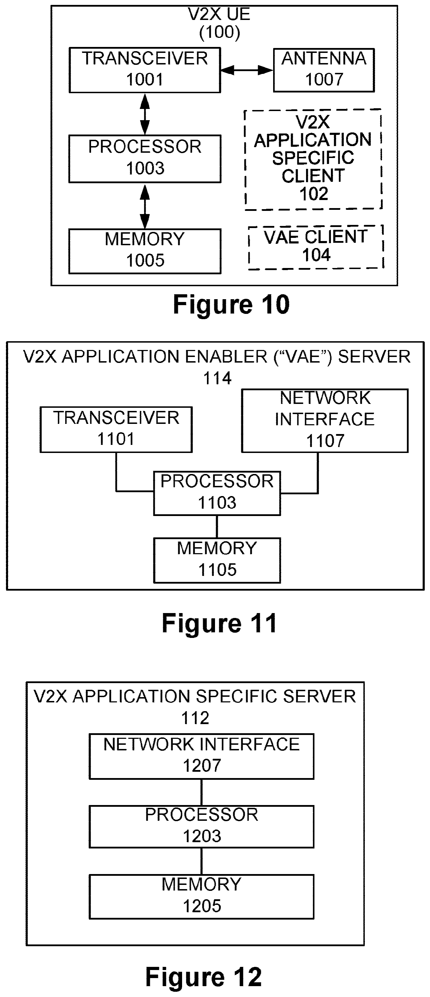

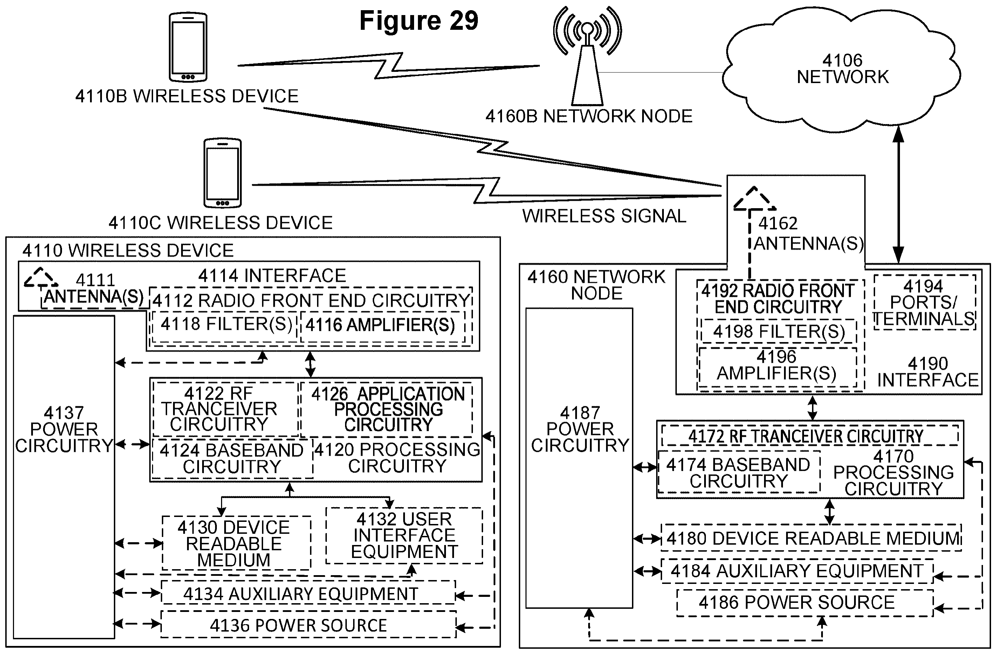

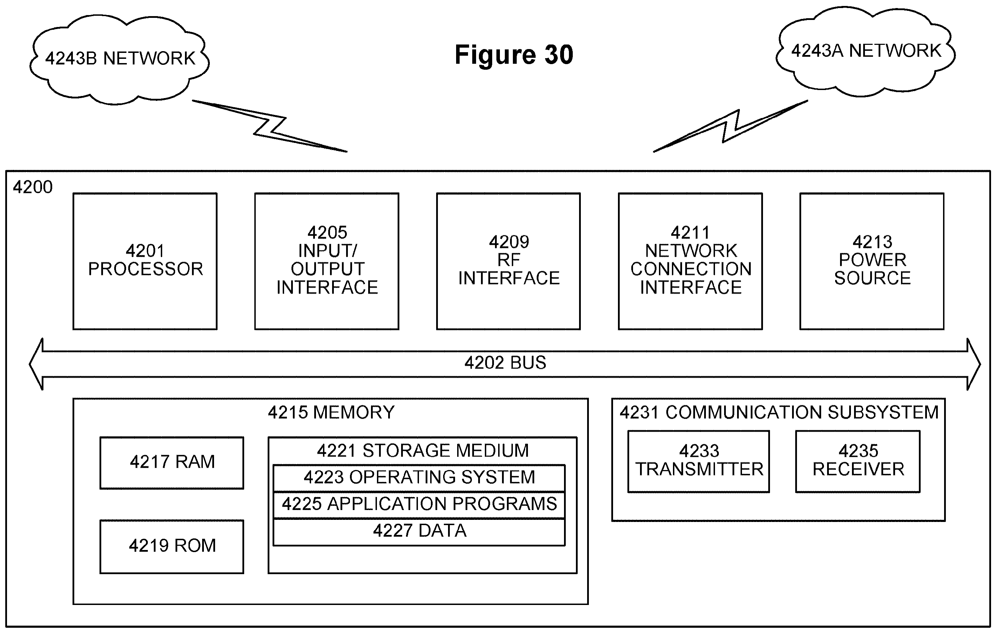

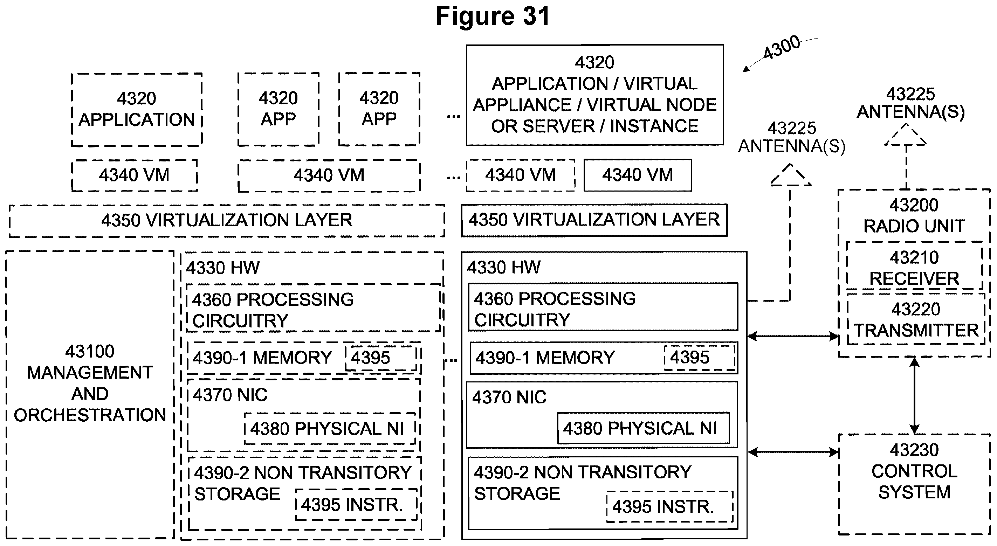

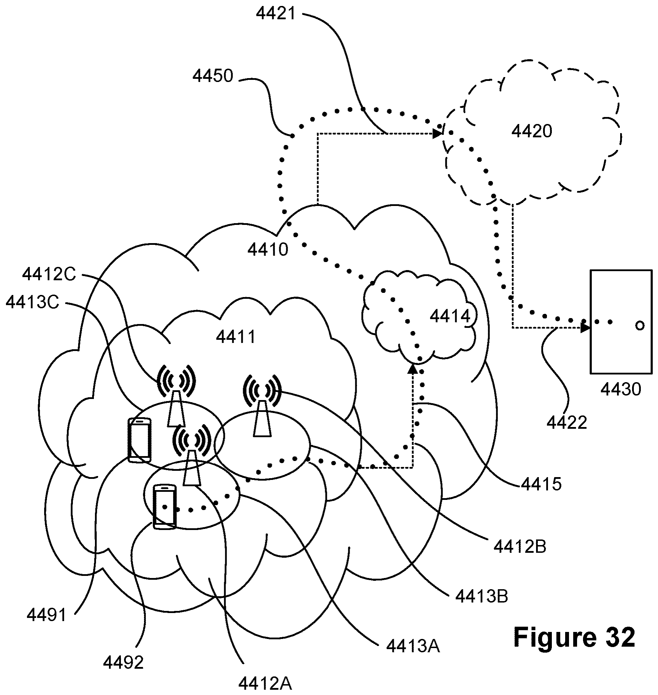

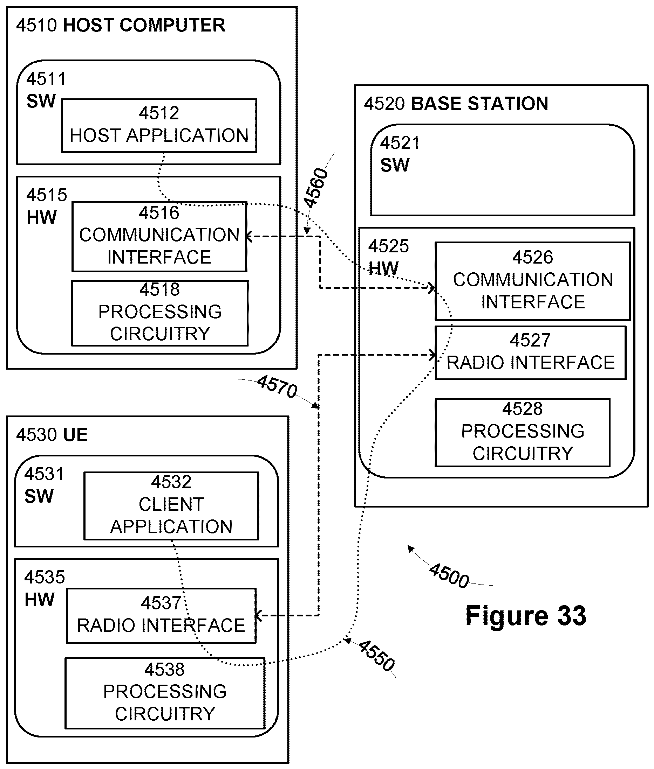

Figure 12 is a block diagram illustrating elements of a V2X UE 800 that implements a V2X application specific client 102 and/or a VAE client 104 (V2X UE may also be referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of inventive concepts. (V2X UE 800 may be provided, for example, as discussed below with respect to wireless device 4110 of Figure 29, UE 4200 of Figure 30, virtualization hardware 4430 and virtual machine 4340 of Figure 31, UEs 4491, 4492 of Figure 32, and UE 4530 of Figure 33, all of which should be considered interchangeable in the examples and embodiments described herein and be within the intended scope of this disclosure, unless otherwise noted.) As shown, V2X UE 800 may include an antenna 1007 (e.g., corresponding to antenna 4111 of Figure 29 and/or antenna 43225 of Figure 31) and transceiver circuitry 1001 (also referred to as a transceiver, e.g., corresponding to interface 4114 of Figure 29, interfaces 4205, 4209, 4211, transmitter 4233 and receiver 4235 of Figure 30, transmitter 43210 and receiver 43220 of Figure 31, and radio interface 4537 of Figure 33) including a transmitter and a receiver configured to provide uplink and downlink radio communications with a base station(s) (e.g., corresponding to network node 4160 of Figure 29, also referred to as a RAN node) of a communication network. V2X UE 800 may also include processing circuitry 1003 (also referred to as a processor, e.g., corresponding to processing circuitry 4120 of Figure 29, processor 4201 of Figure 30, processing circuitry 4360 of Figure 31, and processing circuitry 4538 of Figure 33) coupled to the transceiver circuitry, and memory circuitry 1005 (also referred to as memory, e.g., corresponding to device readable medium 4130 of Figure 29 and or memory 4390 of Figure 31) coupled to the processing circuitry. The memory circuitry 1005 may include computer readable program code that when executed by the processing circuitry 1003 causes the processing circuitry to perform operations according to embodiments disclosed herein. According to other embodiments, processing circuitry 1003 may be defined to include memory so that separate memory circuitry is not required. V2X UE 800 may also include an interface (such as a user interface) coupled with processing circuitry 1003, and/or V2X UE 800 may be incorporated in a vehicle.

As discussed herein, operations of V2X UE 800 may be performed by processing circuitry 1003 and/or transceiver circuitry 1001. For example, processing circuitry 1003 may control transceiver circuitry 1001 to transmit communications through transceiver circuitry 1001 over a radio interface to a radio access network node (also referred to as a base station) and/or to receive communications through transceiver circuitry 1001 from a network node over a radio interface. Moreover, modules may be stored in memory circuitry 1005, and these modules may provide instructions so that when instructions of a module are executed by processing circuitry 1003, processing circuitry 1003 performs respective operations (e.g., operations discussed below with respect to Example Embodiments relating to VAE clients).

Figure 11 is a block diagram illustrating elements of a V2X Application Enabler, VAE, server 114 (VAE server 114 may also be referred to as a second server, a network node, base station, eNodeB/eNB, gNodeB/gNB, etc.) configured to provide wireless communication according to embodiments of inventive concepts. (VAE server 114 may be provided, for example, as discussed below with respect to network node 4160 of Figure 29, virtual hardware 4330 or virtual machine 4340 of Figure 31, base stations 4412a, 4412b, and 4412c of Figure 32 and/or base station 4520 of Figure 33, all of which should be considered interchangeable in the examples and embodiments described herein and be within the intended scope of this disclosure, unless otherwise noted.) As shown, VAE server 114 may include transceiver circuitry 1101 (also referred to as a transceiver, e.g., corresponding to portions of interface 4190 of Figure 29 and/or portions of radio interface 4527 of Figure 33) including a transmitter and a receiver configured to provide uplink and downlink radio communications with other servers and nodes of a communication network. The VAE server 114 may include network interface circuitry 1107 (also referred to as a network interface, e.g., corresponding to portions of interface 4190 of Figure 29, network interfaces 4370, 4380 of Figure 31, and/or portions of communication interface 4526 of Figure 33) configured to provide communications with other nodes (e.g., with other base stations) of the RAN and/or core network CN. VAE server 114 may also include processing circuitry 1103 (also referred to as a processor, e.g., corresponding to processing circuitry 4170 of Figure 29, processing circuitry 4360 of Figure 31 and/or processing circuitry 4528 of Figure 33) coupled to the transceiver circuitry, and memory circuitry 1105 (also referred to as memory, e.g., corresponding to device readable medium 4180 of Figure 29 and/or memory 4390 of Figure 31) coupled to the processing circuitry. The memory circuitry 1105 may include computer readable program code that when executed by the processing circuitry 1103 causes the processing circuitry to perform operations according to embodiments disclosed herein. According to other embodiments, processing circuitry 1103 may be defined to include memory so that separate memory circuitry is not required. VAE server 114 may also include an interface (such as a user interface) coupled with processing circuitry 1103, and/or VAE server 114 may be incorporated in a vehicle.

As discussed herein, operations of VAE server 114 may be performed by processing circuitry 1103 and/or transceiver circuitry 1101. For example, processing circuitry 1103 may control transceiver circuitry 1101 to transmit communications through transceiver circuitry 1101 over a radio interface to a network node and/or to receive communications through transceiver circuitry 1101 from a node over a radio interface. Moreover, modules may be stored in memory circuitry 1105, and these modules may provide instructions so that when instructions of a module are executed by processing circuitry 1103, processing circuitry 1103 performs respective operations (e.g., operations discussed below with respect to Example Embodiments relating to a first server).

Figure 12 is a block diagram illustrating elements of a V2X application-specific server 112 (V2X application-specific server 112 may also be referred to as a first server, etc.) configured to provide wireless communication according to embodiments of inventive concepts. (V2X application-specific server 112 may be provided, for example, as discussed below with respect to network node 4160 of Figure 29, virtual hardware 4330 or virtual machine 4340 of Figure 31, base stations 4412a, 4412b, and 4412c of Figure 32 and/or base station 4520 of Figure 33, all of which should be considered interchangeable in the examples and embodiments described herein and be within the intended scope of this disclosure, unless otherwise noted.) As shown, V2X application-specific server 112 may include transceiver circuitry (not shown) (also referred to as a transceiver, e.g., corresponding to portions of interface 4190 of Figure 29 and/or portions of radio interface 4527 of Figure 33) including a transmitter and a receiver configured to provide uplink and downlink radio communications with other servers and nodes of a communication network. The V2X application-specific server 112 may include network interface circuitry 407 (also referred to as a network interface, e.g., corresponding to portions of interface 4190 of Figure 29, network interfaces 4370, 4380 of Figure 31, and/or portions of communication interface 4526 of Figure 33). V2X application-specific server 112 may also include processing circuitry 1203 (also referred to as a processor, e.g., corresponding to processing circuitry 4170 of Figure 29, processing circuitry 4360 of Figure 31 and/or processing circuitry 4528 of Figure 33) coupled to the transceiver circuitry, and memory circuitry 1205 (also referred to as memory, e.g., corresponding to device readable medium 4180 of Figure 29 and/or memory 4390 of Figure 31) coupled to the processing circuitry. The memory circuitry 1205 may include computer readable program code that when executed by the processing circuitry 1203 causes the processing circuitry to perform operations according to embodiments disclosed herein. According to other embodiments, processing circuitry 1203 may be defined to include memory so that separate memory circuitry is not required. V2X application-specific server 112 may also include an interface (such as a user interface) coupled with processing circuitry 1203.

As discussed herein, operations of V2X application-specific server 112 may be performed by processing circuitry 1203 and/or transceiver circuitry 1201. For example, processing circuitry 1203 may control transceiver circuitry 1201 to transmit communications through transceiver circuitry 1201 over a radio interface to a network node and/or to receive communications through transceiver circuitry 1201 from a node over a radio interface. Moreover, modules may be stored in memory circuitry 1205, and these modules may provide instructions so that when instructions of a module are executed by processing circuitry 1203, processing circuitry 1203 performs respective operations (e.g., operations discussed below with respect to Example Embodiments relating to first servers).

This application deals with session-oriented services such as see-through for pass maneuver (when implemented via vehicle-to-Network (V2N) communication) high-definition sensor sharing (when implemented via V2N communication), tele-operated driving between a V2X application server 112, acting as a remote driver, and a V2X UE 100, acting as an operated vehicle, etc.. The disclosure herein focuses on triggers for session-oriented services at the V2X application-specific server 112. A session-oriented service is a service provide specifically for a session and is terminated when the session has been terminated.

There are several example use-cases where ToD support is needed:
- The driver of vehicle or the automated driving system relies on a remote driver to take control of the vehicle for a period to the destination.
- The driver of vehicle or the automated driving system that enters a construction zone or the scene of an accident sends a tele-operated driving request to the remote driver to take control of the vehicle for a limited time and area.
- Automated parking: The driver of vehicle or the automated driving system enters a public or private parking area and requests remote driving support for automated parking.
- Infrastructure based tele-operated driving: This is a way of implementing ToD using the data and inputs from infrastructure sensors and cameras to the remote driver, instead of only from the on-board sensors and cameras of the vehicle.

Consequently, there are two levels of control:
- A remote driver sends assisting information as trajectory information (e.g. way points) to the vehicle or automated driving system which is still in charge of the operation control of the vehicle, e.g. angle of the steering wheel, braking, and accelerating.
- A remote driver takes full control of driving the car and is able to remotely operate the car e.g. control acceleration, angle of steering wheels.

In session-oriented services such as tele-operated driving (ToD), a remote entity, either human or machine, provides relevant information to the vehicle that is remotely driven. For instance, in some implementations a remote driving center provides trajectories to the vehicle in order to drive in an autonomous manner to the available/predefined parking spot. In other implementations, a remote driving center (human or machine) undertakes to drive the vehicle (i.e., sending steering/command instruction), supported by real time video streaming that is sent from the remotely driven vehicle and sensor information. Overall speaking, a tele-operated driving session involves the transmission from the vehicle to the driving center of sensor data (interpreted objects), progressive high definition video/camera (up to four cameras are needed, one for each corner of the vehicle) in case of human remote driver. The information that are sent from the remote center to the vehicle are in the form of driving trajectories (e.g., in the form of waypoints with associated timestamps), and steering commands such as torque values for brake/acceleration and steering. Depending on the implementation, tele-operating driving might require latency down to 20ms (this is to ensure that commands and vehicle status are synched) and data rate up to 64 Mbps considering the transmission of video at HD quality from multiple qualities. Considering that when such requirements are not met the tele-operated driving cannot happen (i.e., the vehicle is stopped from being driven remotely and the vehicle has to switch to full autonomous driving or to switch to human driver in the vehicle), it is then important to know when/where tele-operated driving can be supported.

The inventive concepts described herein enable at least the following:
- Triggering a session-oriented service, such as a ToD session, from the V2X application-specific server to the VAE server, updating and terminating the session.
- Notifications from the VAE server to the V2X application-specific server about established sessions for session establishment, update (e.g., parameter changes) and termination.
- Notifications from the VAE client to the V2X application-specific client about established sessions for session establishment, update and termination

In various embodiments of inventive concepts, the VAE layer provides support at the application layer for session-oriented services such as tele-operated driving by establishing, updating and terminating sessions. Procedures for triggering, maintaining, changing, and terminating session-oriented services such as tele-operated driving at the V2X application-specific server towards the VAE server and the notifications towards V2X application-specific server and client shall be described. Thus, a viable mechanism for a V2X application server to establish, maintain, and terminate a session-oriented service as tele-operated driving with the V2X UE can be achieved using the inventive concepts described herein.

A process for triggering (e.g., initiating) session-oriented service establishment shall now be described. In some embodiments, the V2X application-specific server 112 has received a request from the V2X application-specific client 102, together with information needed for performing a session-oriented service, to trigger a session-oriented service. The V2X application-specific server 112 evaluates the request from the V2X application-specific client 102 and decided to trigger the session-oriented service.

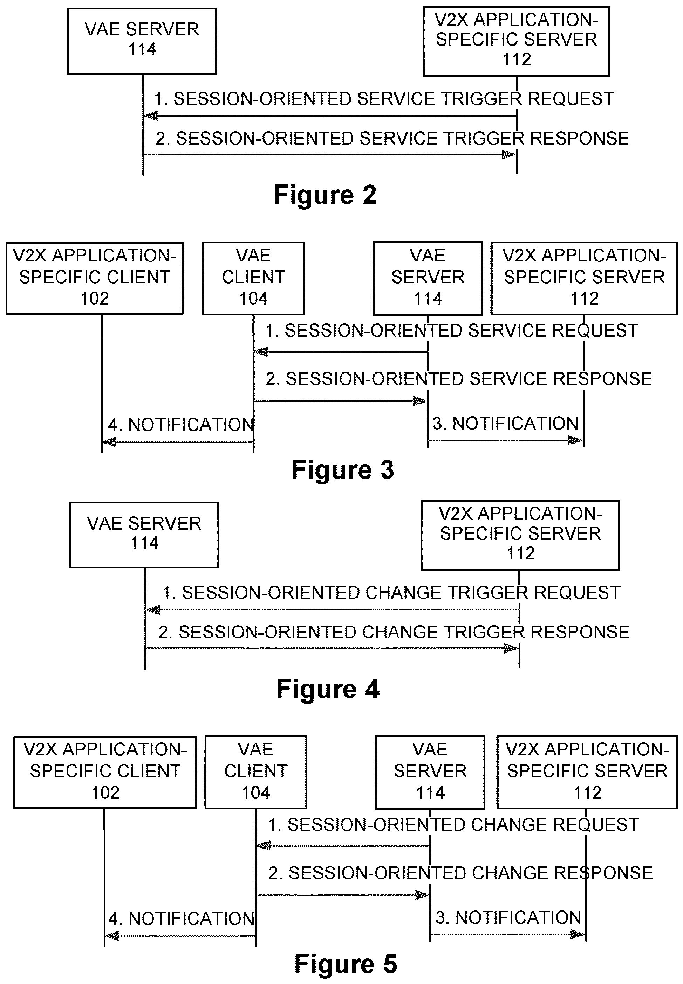

Turning to Figure 2, in operation 1, the V2X application-specific server 112 triggers the VAE server 114 to initiate a session-oriented service to the VAE client 104. This request can include information such as the identity of the VAE client, the identity of the V2X application specific server, the identity of the service session, and the "type" or "QoS requirements" of the session.

When it comes to information related to service-type or to QoS request, examples of such information might include information of how many flows are associated to the session of the session-oriented service(e.g., the session can have multiple flows, e.g, one for uplink video and one for control information), for each of this flow the server can specify:
- Primary service requirements (minimum bitrate, etc.) and alternative service requirements ordered in a prioritized way.
- Indication whether Notification control is required in case of un-fulfillment / re-fulfilment of QoS.
- Indication whether QoS sustainability analytics information is required as defined in TS 23.288, clause 6.9. If so, the server might also include in the request:
   ▪ KPI (key performance indicator) to be considered for generating QoS sustainability analytics.
   ▪ Threshold for triggering notifications on QoS sustainability analytics.
   ▪ In-advance time for triggering notifications on QoS sustainability analytics.
   ▪ Information on UE measurements (KPIs, frequency of measurements, reporting thresholds, etc.) related to the session-oriented service that can be collected at application layer, indicating whether such measurements can be collected at client or server side

In operation 2, the VAE server 114 provides a session-oriented service trigger response to the V2X application specific server 112 indicating the ability of VAE server 112 to initiate a session-oriented service with the VAE client. The response is based on network information and other VAE server specific information (e.g. load). In case the VAE server is not capable of supporting session-oriented service requested by the V2X application specific server, an indication that the VAE server 114 is not capable of supporting the session-oriented service is provided in the response in the response.

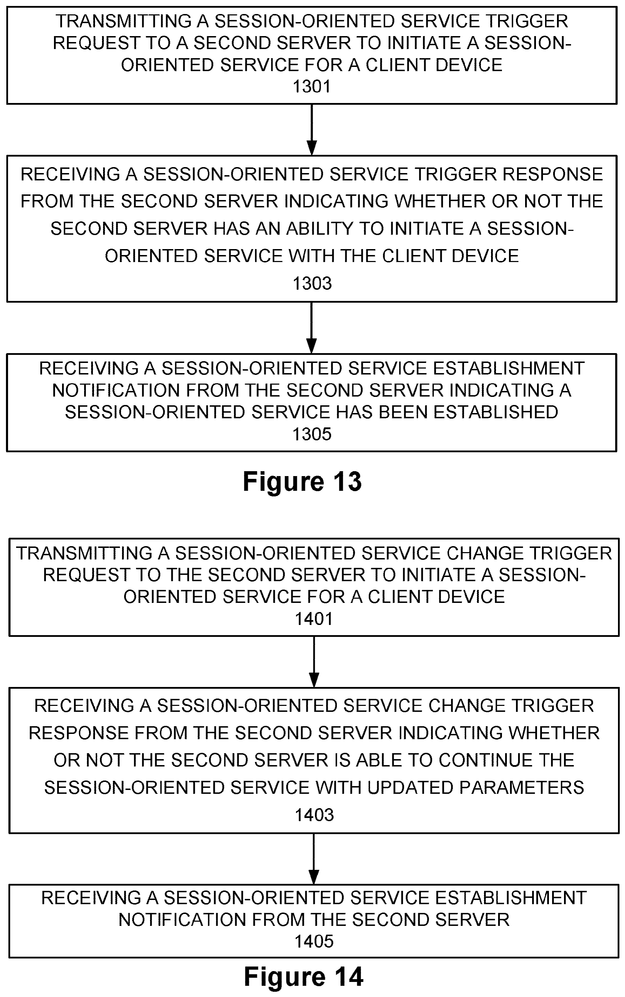

Figure 13 illustrates operations of Figure 2 from the perspective of the V2X application specific server, which is designated as a first server 112. Turning to Figure 13, operations of the first server 112 (implemented using the structure of the block diagram of Figure 12) will now be discussed with reference to the flow chart of Figure 13 according to some embodiments of inventive concepts in supporting session-oriented services. For example, modules may be stored in memory 1205 of Figure 12, and these modules may provide instructions so that when the instructions of a module are executed by respective communication device processing circuitry 1203, processing circuitry 1203 performs respective operations of the flow chart.

In block 1301, the processing circuitry 1203 transmits a session-oriented service trigger request to a second server 114 to initiate a session-oriented service for a client device 104. Transmitting the session-oriented service trigger request comprises transmitting the session-oriented service trigger request with information associated with the session-oriented service in some embodiments. The information can include one or more of an identity of the client device 104, the identity of the first server 112, the identity of the service session, and a type or quality of service, QoS, requirement of the session-oriented service.

Information related to the type or QoS request comprises information on how many flows are associated to the session-oriented service, and for each flow, the information comprises one or more of: primary service requirements and alternative service requirements ordered in a prioritized way; an indication whether notification control is required in case of un-fulfillment/re-fulfilment of QoS; an indication whether QoS sustainability analytics information is required; and information on user equipment, UE, measurements. When QoS sustainability analytics information is required, the information further includes one or more of: key performance indicator, KPI, to be considered for generating QoS sustainability analytics; a threshold for triggering notifications on QoS sustainability analytics; and in-advance time for triggering notifications on QoS sustainability analytics.

In block 1303, the processing circuitry 1303 receives a session-oriented service trigger response from the second server 114 indicating whether or not the second server 114 has an ability to initiate a session-oriented service with the client device. As indicated above, whether or not the second server has the ability to initiate a session-oriented service is based on network information and other server specific information (e.g. load). In case the second server 114 is not capable of supporting session-oriented service requested by the first server 112, it is indicated in the response.

As explained in the description of Figure 3, the processing circuitry 1203 in block 1305 receives a session-oriented service establish notification from the second server 114 indicating a session-oriented service has been established.

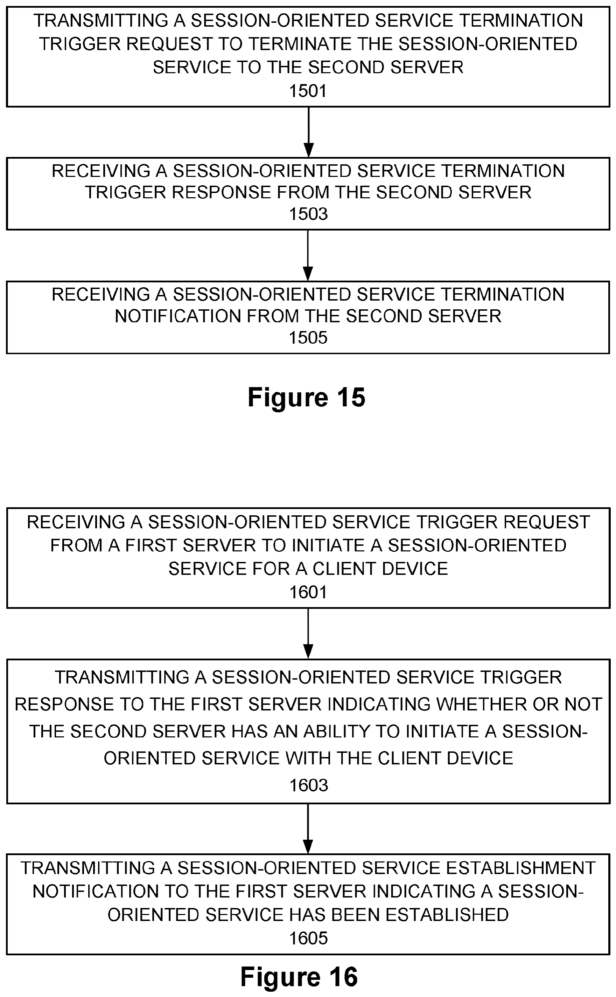

Figure 16 illustrates operations of Figure 2 from the perspective of the VAE server, which is designated as a second server 114. Turning to Figure 16, operations of the second server 114 (implemented using the structure of the block diagram of Figure 11) will now be discussed with reference to the flow chart of Figure 16 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 1601, the processing circuitry 1103 receives a session-oriented service trigger request from a first server 112 to initiate a session-oriented service for a client device 104. Receiving the session-oriented service trigger request in some embodiments includes receiving the session-oriented service trigger request with information associated with the session-oriented service. The information can include one or more of an identity of the client device 104, the identity of the first server 112, the identity of the service session, and a type or quality of service, QoS, requirement of the session-oriented service.

Information related to the type or QoS request comprises information on how many flows are associated to the session-oriented service, and for each flow, the information comprises one or more of: primary service requirements and alternative service requirements ordered in a prioritized way; an indication whether notification control is required in case of un-fulfillment/re-fulfilment of QoS; an indication whether QoS sustainability analytics information is required; and information on user equipment, UE, measurements. When QoS sustainability analytics information is required, the information further includes one or more of: key performance indicator, KPI, to be considered for generating QoS sustainability analytics; a threshold for triggering notifications on QoS sustainability analytics; and in-advance time for triggering notifications on QoS sustainability analytics.

In block 1603, the processing circuitry 1103 transmits a session-oriented service trigger response to the first server 112 indicating whether or not the second server 114 has the ability to initiate a session-oriented service with the client device 104. As indicated above, whether or not the second server has the ability to initiate a session-oriented service is based on network information and other server specific information (e.g. load). In case the second server 114 is not capable of supporting session-oriented service requested by the first server 112, it is indicated in the response.

As explained in the description of Figure 3, the processing circuitry 1103 in block 1605 transmits a session-oriented service establish notification to the first server 112 indicating a session-oriented service has been established.

Turning now to Figure 3, session-oriented service establishment shall be described. The V2X UE (e.g., client device 100 having a VAE client 104 and/or a V2X application-specific client 102) has been authenticated for using session-oriented services and has connected to the V2X application server 112. The VAE server 114 has agreed to establish a session upon the request from the V2X application specific server 112 as described above.

In operation 1, the VAE server 114 sends a request to one or more VAE clients to establish a session-oriented service including identity of the VAE client, the identity of the session and a reporting configuration. The reporting configuration indicates what parameters should be reported and how frequently the parameters should be reported.

In operation 2, the VAE client 104 sends a session-oriented service response to the VAE server 114 indicating approval of the session establishment request by the VAE server 114.

In operation 3, the VAE server 114 sends a session-oriented service establish notification to the V2X application-specific server 112 (block 1305 of Figure 13 and block 1605 of Figure 16).

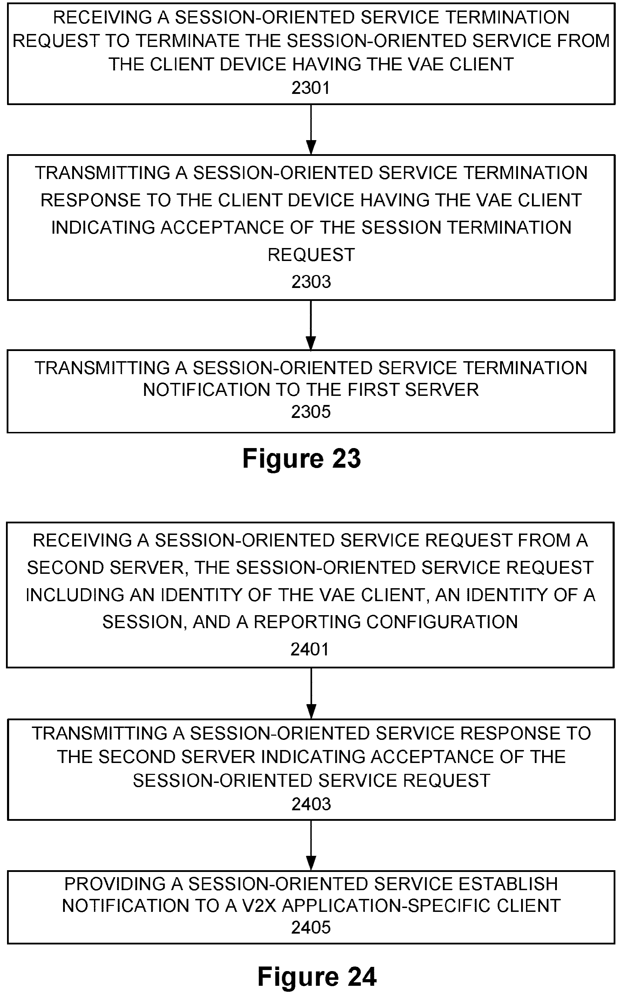

In operation 4, the VAE client 104 sends a session-oriented service establish notification to the V2X application-specific client 102 (block 2405 of Figure 24).

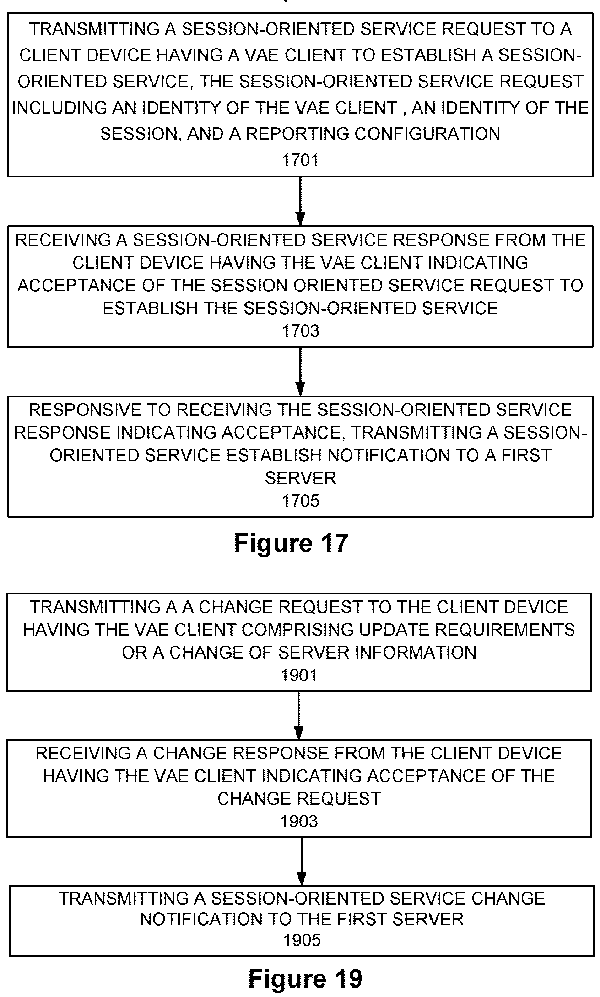

Figure 17 illustrates operations of Figure 3 from the perspective of the VAE server 114, which is designated as a second server 114. Turning to Figure 17, operations of the second server 114 (implemented using the structure of the block diagram of Figure 11) will now be discussed with reference to the flow chart of Figure 17 according to some embodiments of inventive concepts in supporting session-oriented services for a vehicle. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 1701, the processing circuitry 1103 transmits a session-oriented service request to a client device 100 having a VAE client 104 to establish a session-oriented service, the session-oriented service request including an identity of the VAE client 104, an identity of the session, and a reporting configuration.

In block 1703, the processing circuitry 1103 receives a session-oriented service response from the client device 100 having the VAE client 104 indicating acceptance of the session oriented service request to establish the session-oriented service. In block 1705, the processing circuitry 1103, responsive to receiving the session-oriented service response indicating acceptance, transmits a session-oriented service establish notification to a first server 112. Block 1705 is analogous to block 1305 of Figure 13.

Figure 24 illustrates operations of Figure 3 from the perspective of the VAE client 104. Turning to Figure 24, operations of the VAE client 104 (implemented using the structure of the block diagram of Figure 10) will now be discussed with reference to the flow chart of Figure 24 according to some embodiments of inventive concepts in supporting session-oriented services. For example, modules may be stored in memory 1005 of Figure 10, and these modules may provide instructions so that when the instructions of a module are executed by respective communication device processing circuitry 1003, processing circuitry 1003 performs respective operations of the flow chart.

In block 2401, the processing circuitry 1003 receives a session-oriented service request from a second server 114, the session-oriented service request including an identity of the VAE client 104, and identity of a session, and a reporting configuration.

In block 2403, the processing circuitry 1003 transmits a session-oriented service response to the second server 114 indicating approval of the session-oriented service request. In block 2405, the processing circuitry 1003 provides a session-oriented service establish notification to a V2X application-specific client 102.

Once the session-oriented service has been established with the VAE client 104 as described above, the V2X application-specific server 112 may need to update parameters of the session, e.g. by receiving updates about the remote driving session parameters from the V2X application-specific client 102.

Turning to Figure 4, a procedure for triggering a session-oriented service change from the V2X application-specific server 112 to the VAE server 114 is illustrated. In operation 1, the V2X application-specific server 112 provides the VAE server 114 with a session-oriented change trigger event that includes the identity of the session and the update of session parameters, e.g. change of QoS requirements of the session.

In operation 2, the VAE server 114 provides a session-oriented service change trigger response including the ability to continue the session-oriented service with the VAE client 104 with the updated conditions. In case the VAE server 114 is not capable of continuing session-oriented service with the updated conditions, an indication that the VAE server 114 is not capable of continuing the session-oriented service is provided in the response.

Figure 14 illustrates operations of Figure 4 from the perspective of the V2X application specific server 112, which is designated as a first server 112. Turning to Figure 14, operations of the first server 112 (implemented using the structure of the block diagram of Figure 12) will now be discussed with reference to the flow chart of Figure 14 according to some embodiments of inventive concepts in supporting session-oriented services. For example, modules may be stored in memory 1205 of Figure 12, and these modules may provide instructions so that when the instructions of a module are executed by respective communication device processing circuitry 1203, processing circuitry 1203 performs respective operations of the flow chart.

In block 1401, the processing circuitry 1203 transmits a session-oriented service change request to the second server (114), the session-oriented service change request comprising one or more updates to service information or a change in server information.

In block 1403, the processing circuitry 1203 receives a session-oriented service change response from the second server 114 indicating whether or not the second server 114 is able to continue the session-oriented service with the updated session parameters.

Once the session-oriented service change has been completed, the processing circuitry 1203 receives, in block 1405, a session-oriented service change notification from the second server 114.

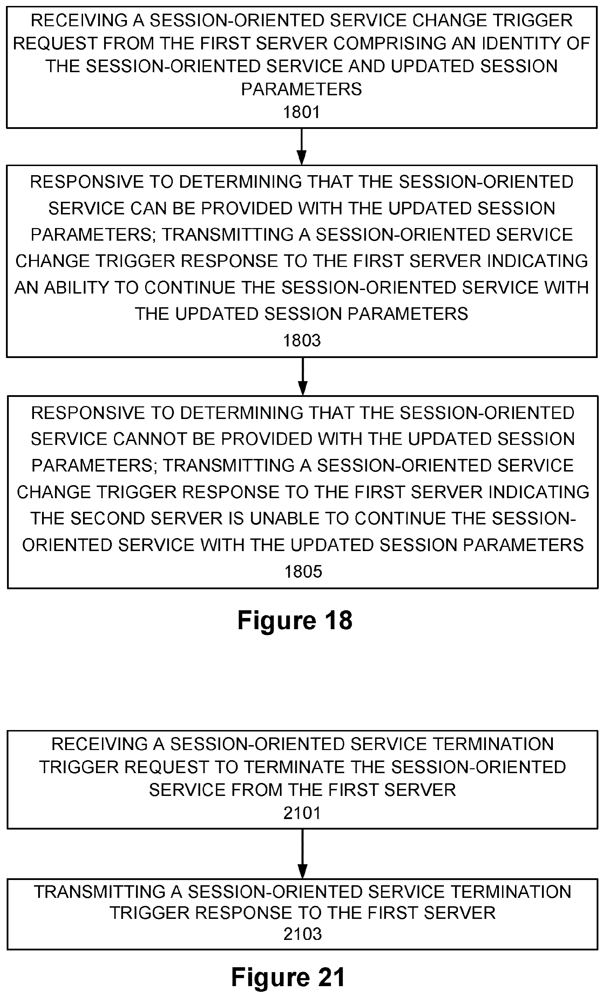

Figure 18 illustrates operations of Figure 4 from the perspective of the VAE server 114, which is designated as a second server 114. Turning to Figure 18, operations of the second server 114 (implemented using the structure of the block diagram of Figure 11) will now be discussed with reference to the flow chart of Figure 18 according to some embodiments of inventive concepts in supporting session-oriented. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 1801, the processing circuitry 1103 receives, from the first server (112), a session-oriented service change trigger request comprising an identity of the session-oriented service and updated session parameters the session-oriented service change request.

In block 1803, the processing circuitry 1103, responsive to determining that the session-oriented service can be provided with the updated session parameters; transmits a session-oriented service change trigger response to the first server 112 indicating an ability to continue the session-oriented service with the updated session parameter.

In block 1805, the processing circuitry 1103, responsive to determining that the session-oriented service cannot be provided with the updated session parameters; transmits a session-oriented service change trigger response to the first server 112 indicating the second server 114 is unable to continue the session-oriented service with the updated session parameters.

Turning now to Figure 5, a procedure for updating a session-oriented service between the VAE server 114 and the VAE client 104 shall now be described. The VAE server 114 has established a session-oriented service with the VAE client and has received a session-oriented service update from the V2X application-specific server 112 as described above or a change in QoS and network conditions from 3GPP network system 108.

In operation 1, the VAE server 114 sends a session-oriented change request to one or more VAE clients 104 including updates requirements (e.g. change of network/QoS requirements), or change in server information (e.g. change of the VAE server).

In operation 2, the VAE client 104 sends a session-oriented change response to the VAE server 114 indicating acceptance of the session-oriented change request by the VAE server 114.

In operation 3, the VAE server 114 sends a session-oriented service change notification to the V2X application-specific server 112.

In operation 4, the VAE client 104 send a session-oriented service change notification to the V2X application-specific client 102.

Figure 19 illustrates operations of Figure 5 from the perspective of the VAE server 114, which is designated as a second server 114. Turning to Figure 19, operations of the second server 114 (implemented using the structure of the block diagram of Figure 11) will now be discussed with reference to the flow chart of Figure 18 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 1901, the processing circuitry 1103 transmits a session-oriented change request to the client device 100 having the VAE client 104 that includes update requirements or a change of server information. In block 1903, the processing circuitry 1103 receives a session-oriented change response from the client device (100) having the VAE client (104) indicating acceptance of the change request.

In block 1905, the processing circuitry 1103 transmits a session-oriented service change notification to the first server 112.

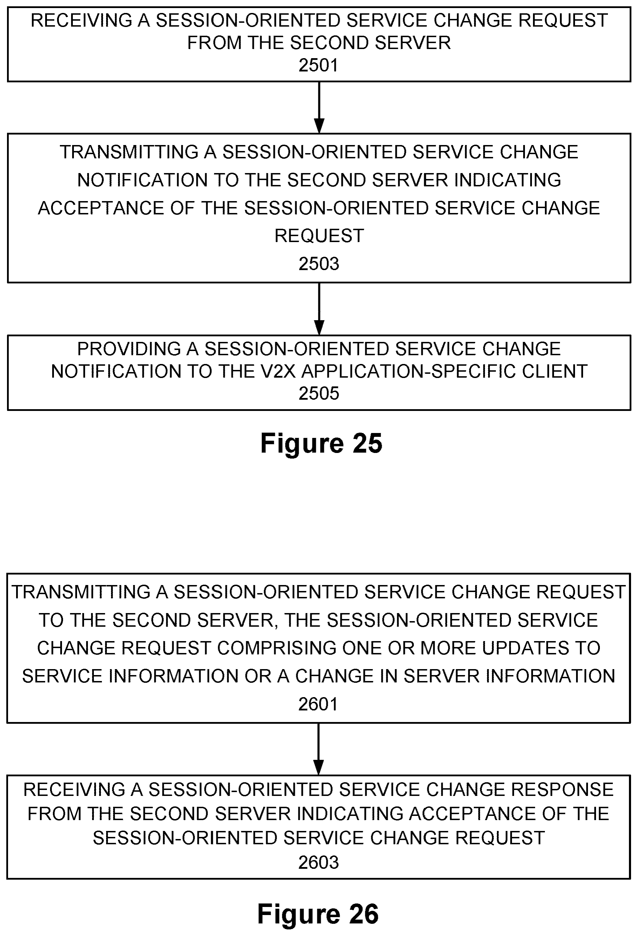

Figure 25 illustrates operations of Figure 5 from the perspective of the VAE client 104. Turning to Figure 25, operations of the VAE client 104 (implemented using the structure of the block diagram of Figure 10) will now be discussed with reference to the flow chart of Figure 25 according to some embodiments of inventive concepts in supporting session-oriented services. For example, modules may be stored in memory 1005 of Figure 10, and these modules may provide instructions so that when the instructions of a module are executed by respective communication device processing circuitry 1003, processing circuitry 1003 performs respective operations of the flow chart.

In block 2501, the processing circuitry 1003 receives a session-oriented service change request from the second server 114. In block 2503, the processing circuitry 1003 transmits a session-oriented service change notification to the second server (114) indicating acceptance of the session-oriented service change request. In block 2505, the processing circuitry 1003 provides a session-oriented service change notification to the V2X application-specific client 102.

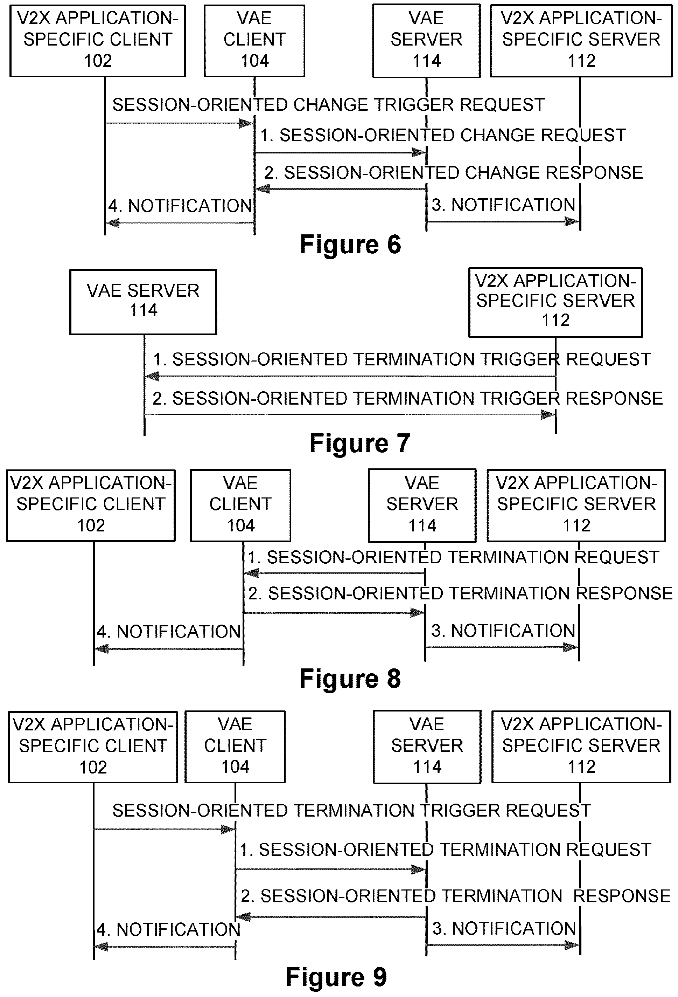

Turning to Figure 6, in some embodiments of inventive concepts, the session-oriented service update is triggered from the VAE client 104. For example, this can be the case when the V2X application specific client 102 is in charge of performing service adaptation. One example is when V2X application specific client 102 triggers service adaptation as a reaction to the reception of a QoS notifications or network information, which could have been provided either from the V2X application specific server 112 (upon reception from the VAE server 114) or directly from the VAE server 114 through the VAE client 104.

The procedure for updating a session-oriented service triggered by the VAE client is that the VAE client 104 receives a session-oriented change trigger request from the V2X application -specific client 102.

In operation 1, the VAE client 104 sends a session-oriented change request to one or more VAE servers 114 including updates to service information (e.g. activated services, updates to vehicle trajectory, etc.), requirements (e.g. change of network/QoS requirements), or server information (e.g. change of VAE server). The VAE server 114 checks the received session-oriented change request and in operation 2, transmits a session-oriented change response to the VAE client 104 indicating acceptance of the session-oriented change request received from the VAE client 104. The VAE server 114 sends a session-oriented service change notification to the V2X application-specific server 112 in operation 3. The VAE client 104 sends a session-oriented service change notification to the V2X application-specific client 102 in operation 4.

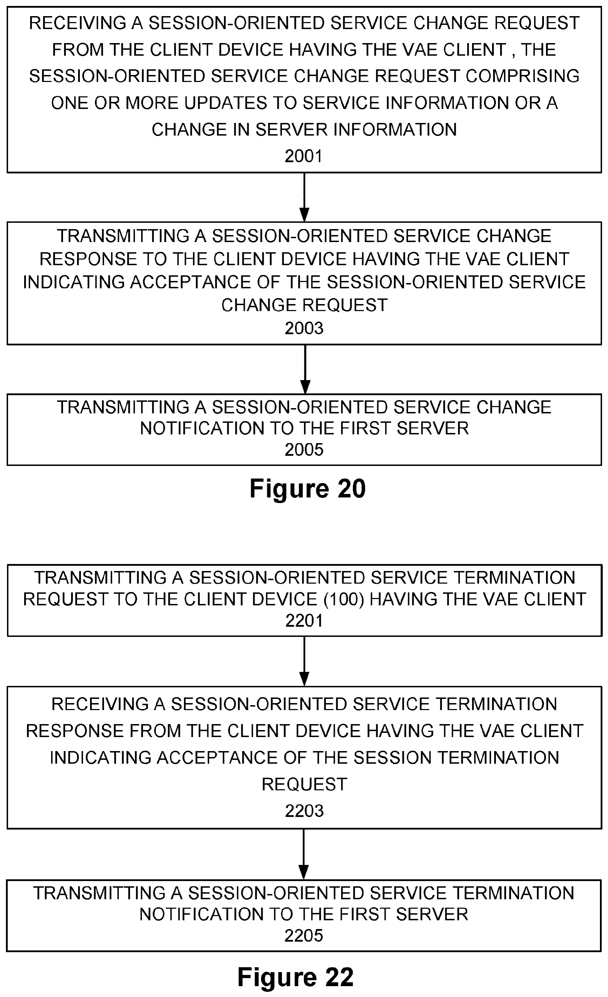

Figure 20 illustrates operations of updating a session-oriented service triggered by the VAE client from the perspective of the VAE server 114. Turning to Figure 20, operations of the second server 114 (implemented using the structure of the block diagram of Figure 11) will now be discussed with reference to the flow chart of Figure 20 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 2001, the processing circuitry 1103 receives a session-oriented service change request from the client device 100 having the VAE client 104, the session-oriented service change request including one or more updates to service information or a change in server information.

In block 2003, the processing circuitry 1103 transmits a session-oriented service change response to the client device 100 having the VAE client 104 indicating acceptance of the session-oriented service change request. In block 2005, the processing circuitry 1103 transmits a session-oriented service change notification to the first server 112.

Figure 26 illustrates operations of updating a session-oriented service triggered by the VAE client 104 from the perspective of the VAE client 104. Turning to Figure 26, operations of the VAE client 104 (implemented using the structure of the block diagram of Figure 10) will now be discussed with reference to the flow chart of Figure 26 according to some embodiments of inventive concepts in supporting session-oriented services. For example, modules may be stored in memory 1005 of Figure 10, and these modules may provide instructions so that when the instructions of a module are executed by respective communication device processing circuitry 1003, processing circuitry 1003 performs respective operations of the flow chart.

In block 2601, the processing circuitry 1003 transmits a session-oriented service change request to the second server (114), the session-oriented service change request comprising one or more updates to service information or a change in server information. In block 2603, the processing circuitry 1103 receives a session-oriented service change response from the second server 114 indicating acceptance of the session-oriented service change request.

A procedure for triggering a session-oriented service termination request from the V2X application-specific server 112 to the VAE server 114 shall now be described. The VAE server 114 has established a session-oriented service with the VAE client 1014 as described above and the V2X application specific server 114 has decided to terminate the session-oriented service. The decision to terminate the session-oriented service can based on the request from the V2X application specific client 102 or a local decision by the V2X application specific server 112.

Turning to Figure 7, in operation 1, the V2X application-specific server 1121 provides the VAE server 114 with a session-oriented termination trigger request to terminate the session-oriented service with the VAE client 104.

In operation 2, the VAE server 114 provides a session-oriented service termination trigger response to the V2X application-specific server 112 that the session can be terminated.

Figure 15 illustrates operations of Figure 6 from the perspective of the V2X application specific server 112, which is designated as a first server 112. Turning to Figure 15, operations of the first server 112 (implemented using the structure of the block diagram of Figure 12) will now be discussed with reference to the flow chart of Figure 15 according to some embodiments of inventive concepts in supporting session-oriented services. For example, modules may be stored in memory 1205 of Figure 12, and these modules may provide instructions so that when the instructions of a module are executed by respective communication device processing circuitry 1203, processing circuitry 1203 performs respective operations of the flow chart.

In block 1501, the processing circuitry 1203 transmits a session-oriented service termination trigger request to terminate the session-oriented service to the second server 114. In block 1503, the processing circuitry 1203 receives a session-oriented service termination trigger response from the second server 114. In bock 1505, the processing circuitry 1203 receives a session-oriented service termination notification from the second server 114. This notification is received after the session-oriented service has been terminated.

Figure 21 illustrates operations of Figure 7 from the perspective of the VAE server 114. Turning to Figure 21, operations of the second server 114 (implemented using the structure of the block diagram of Figure 11) will now be discussed with reference to the flow chart of Figure 21 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 2101, the processing circuitry 1103 receives a session-oriented service termination trigger request to terminate the session-oriented service from the first server 112. In operation 2103, the processing circuitry 1103 transmits a session-oriented service termination trigger response to the first server 112. In operation 2105, the processing circuitry 1103 transmits a session-oriented service termination notification to the first server 112. The notification is sent after the session-oriented service has been terminated.

Turning to Figure 8, a procedure for terminating a session-oriented service between the VAE server 114 and the VAE client 104 shall now be described. In operation 1, the VAE server 114 sends a session-oriented termination request to the VAE client 104 to terminate the session (e.g. end of session with VAE server or requirements for session-oriented service not satisfied).

In operation 2, the VAE client 104 sends a session-oriented termination response to the VAE server 114 indicating acceptance of the session-oriented termination request transmitted by the VAE server 114.

In operation 3, the VAE server 114 sends a session-oriented service termination notification to the V2X application-specific server 114.

In operation 4, the VAE client 104 send a session-oriented service termination notification to the V2X application-specific client 102.

Figure 22 illustrates operations of Figure 8 from the perspective of the VAE server 114. Turning to Figure 22, operations of the second server 114 (implemented using the structure of the block diagram of Figure 11) will now be discussed with reference to the flow chart of Figure 22 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 2201, the processing circuitry 1103 transmits a session-oriented service termination request to the client device 100 having the VAE client 104.

In block 2203, the processing circuitry 1103 receives a session-oriented service termination response from the client device 100 having the VAE client 104 indicating acceptance of the session termination request. In block 2205, the processing circuitry 1103 transmits a session-oriented service termination notification to the first server 112.

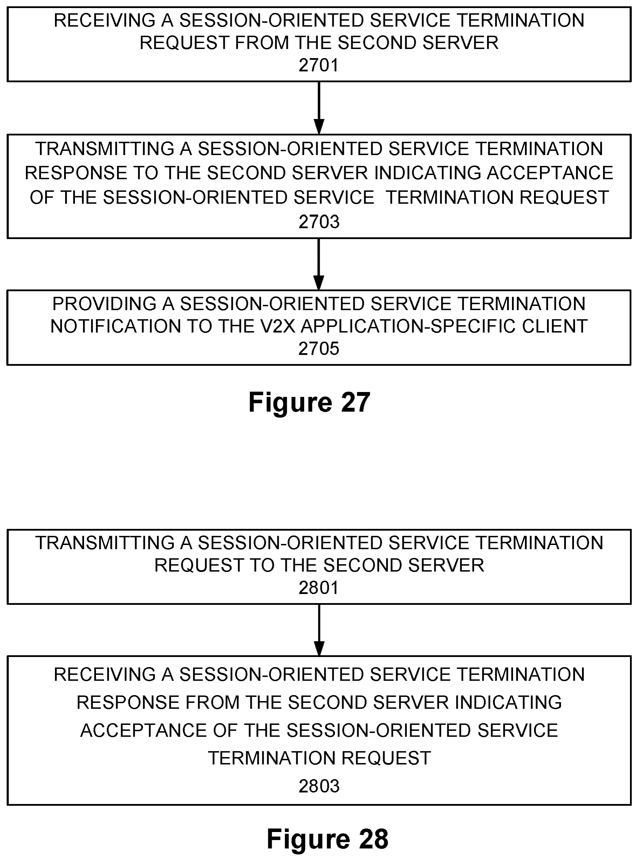

Figure 27 illustrates operations of Figure 8 from the perspective of the VAE client 104. Turning to Figure 27, operations of the VAE client 104 (implemented using the structure of the block diagram of Figure 10) will now be discussed with reference to the flow chart of Figure 27 according to some embodiments of inventive concepts in supporting session-oriented services. For example, modules may be stored in memory 1005 of Figure 19, and these modules may provide instructions so that when the instructions of a module are executed by respective communication device processing circuitry 1003, processing circuitry 1003 performs respective operations of the flow chart.

In block 2701, the processing circuitry 1003 receives a session-oriented service termination request from the second server 114. In block 2703, the processing circuitry 1003 transmits a session-oriented service termination response to the second server 114 indicating approval of the session-oriented service termination request. In block 2705, the processing circuitry 1003 provides a session-oriented service termination notification to the V2X application-specific client 102.

Turning to Figure 9, in various other embodiments of inventive concepts, the procedure for terminating a session-oriented service is triggered from the VAE client 104. For example, this can be the case when the V2X application specific client 102 is in charge of performing service adaptation. One example of this is when the V2X application specific client 102 ends the service (e.g., vehicle reached the final destination). Another example is when the V2X application specific client 102 triggers the termination of a session-oriented service as a reaction to the reception of a QoS notifications or network information, e.g., if QoS notifications or network information indicates that the network is not able to fulfill anymore any of the service requirements associated to the service. QoS notifications or network information could have been provided either from the V2X application specific server 112 (upon reception from the VAE server 114) or directly from the VAE server 114 through the VAE client 104.

The procedure for terminating a session-oriented service triggered by the VAE client 104 is responsive to the VAE client 104 receiving a session-oriented termination trigger request from the V2X application-specific client 102 due to e.g. end of session with the VAE server 114, end of V2X service, reception of QoS notifications indicating that requirements for session-oriented service not satisfied, etc.

The VAE client 102 in operation 1 sends a session-oriented termination request to the VAE server 114 to terminate the session (e.g. end of session with VAE server or requirements for session-oriented service not satisfied).

In operation 2, the VAE server 114 sends a session-oriented termination response to the VAE client 104 indicating acceptance of the session-oriented termination request sent by the VAE client.

In operation 3, the VAE server 114 sends a session-oriented termination notification to the V2X application-specific server 112.

In operation 4, the VAE client 104 sends a session-oriented termination notification to the V2X application-specific client 102.

Figure 23 illustrates operations of terminating a session-oriented service triggered by the VAE client 104 from the perspective of the VAE server 114. Turning to Figure 23, operations of the second server 114 (implemented using the structure of the block diagram of Figure 11) will now be discussed with reference to the flow chart of Figure 23 according to some embodiments of inventive concepts in supporting session-oriented services. For example, modules may be stored in memory 1105 of Figure 11, and these modules may provide instructions so that when the instructions of a module are executed by respective communication device processing circuitry 1103, processing circuitry 1103 performs respective operations of the flow chart.

In block 2301, the processing circuitry 1103 receives a session-oriented service termination request to terminate the session-oriented service from the client device 100 having the VAE client 104. In block 2303, the processing circuitry 1103 transmits a session-oriented service termination response to the client device 100 having the VAE client 104 indicating acceptance of the session termination request. In block 2305, the processing circuitry 1103 transmits a session-oriented service termination notification to the first server 112.

Figure 28 illustrates operations of Figure 7 from the perspective of the VAE client 104. Turning to Figure 28, operations of the VAE client 104 (implemented using the structure of the block diagram of Figure 10) will now be discussed with reference to the flow chart of Figure 28 according to some embodiments of inventive concepts in supporting session-oriented services. For example, modules may be stored in memory 1005 of Figure 10, and these modules may provide instructions so that when the instructions of a module are executed by respective communication device processing circuitry 1003, processing circuitry 1003 performs respective operations of the flow chart.

In block 2801, the processing circuitry 1003 transmits a session-oriented service termination request to the second server 114. In block 2803, the processing circuitry 1003 receives a session-oriented service termination response from the second server (114) indicating approval of the session-oriented service termination request. In some embodiments, the session-oriented service termination request is transmitted responsive to receiving a termination request from the V2X application-specific client 102.

Example embodiments are discussed below.

### Embodiments

Embodiment 1. A method performed by a first server (112) for supporting session-oriented services for a vehicle, the method comprising:
transmitting (1301) a session-oriented service trigger request to a second server (114) to initiate a session-oriented service for a client device (104); and
receiving (1303) a session-oriented service trigger response from the second server (114) indicating whether or not the second server (114) has an ability to initiate a session-oriented service with the client device (104).

Embodiment 2. The method of Embodiment 1, wherein the first server is a vehicle to everything, V2X, application specific server and the second server is a V2X application enabler, VAE, server.

Embodiment 3. The method of any of Embodiments 1-2, wherein transmitting the session-oriented service trigger request comprises transmitting the session-oriented service trigger request with information associated with the session-oriented service.

Embodiment 4. The method of Embodiment 3, wherein the information comprises one or more of an identity of the client device (104), the identity of the first server (112), the identity of the service session, and a type or quality of service, QoS, requirement of the session-oriented service.

Embodiment 5. The method of Embodiment 4, wherein information related to the type or QoS request comprises information on how many flows are associated to the session-oriented service, and for each flow, the information comprises one or more of:
primary service requirements and alternative service requirements ordered in a prioritized way;
an indication whether notification control is required in case of un-fulfillment/re-fulfilment of QoS;
an indication whether QoS sustainability analytics information is required; and
information on user equipment, UE, measurements.

Embodiment 6. The method of Embodiment 5 wherein when QoS sustainability analytics information is required, the information further comprises one or more of:
key performance indicator, KPI, to be considered for generating QoS sustainability analytics.
a threshold for triggering notifications on QoS sustainability analytics; and in-advance time for triggering notifications on QoS sustainability analytics.

Embodiment 7. The method of any of Embodiments 1-6, further comprising:
receiving (1305) a session-oriented service establish notification from the second server (114) indicating a session-oriented service has been established.

Embodiment 8. The method of any of Embodiments 1-7, further comprising:
transmitting (1401) a session-oriented service change trigger request to the second server (114), the session-oriented service change request comprising one or more updates to service information or a change in server information; and
receiving (1403) a session-oriented service change trigger response from the second server (114) indicating whether or not the second server (114) is able to continue the session-oriented service with updated session parameters.

Embodiment 9. The method of Embodiment 8, further comprising:
receiving (1405) a session-oriented service change notification from the second server (114).

Embodiment 10. The method of any of Embodiments 1-7, further comprising:
transmitting (1501) a session-oriented service termination trigger request to terminate the session-oriented service to the second server (114);
receiving (1503) a session-oriented service termination trigger response from the second server (114).

Embodiment 11. The method of Embodiment 10, further comprising:
receiving (1505) a session-oriented service termination notification from the second server (114).

Embodiment 12. A first server (112) adapted to perform operations comprising:
transmitting (1301) a session-oriented service trigger request to a second server (114) to initiate a session-oriented service for a client device (104); and
receiving (1303) a session-oriented service trigger response from the second server (114) indicating whether or not the second server (114) will initiate a session-oriented service with the client device (104).

Embodiment 13. The first server (112) of Embodiment 12 wherein the first server (112) is adapted to perform operations according to any of Embodiments 2-11.

Embodiment 14. A first server (112) comprising:
processing circuitry (1203); and
memory (1205) coupled with the processing circuitry, wherein the memory includes instructions that when executed by the processing circuitry causes the first server (112) to perform operations comprising:
   transmitting (1301) a session-oriented service trigger request to a second server (114) to initiate a session-oriented service for a client device (104); and
   receiving (1303) a session-oriented service trigger response from the second server (114) indicating whether or not the second server (114) has an ability to initiate a session-oriented service with the client device (104).

Embodiment 15. The first server (112) of Embodiment 14, wherein the first server is a vehicle to everything, V2X, application specific server and the second server is a V2X application enabler, VAE, server.

Embodiment 16. The first server (112) of any of Embodiments 14-15, wherein in transmitting the session-oriented service trigger request, the memory includes further instructions that when executed by the processing circuitry (1203) causes the first server (112) to perform operations comprising transmitting the session-oriented service trigger request with information associated with the session-oriented service.

Embodiment 17. The first server (112) of Embodiment 16, wherein the information comprises one or more of an identity of the client device (104), the identity of the first server (112), the identity of the service session, and a type or quality of service, QoS, requirement of the session-oriented service.

Embodiment 18. The first server (112) of Embodiment 17, wherein information related to the type or QoS request comprises information on how many flows are associated to the session-oriented service, and for each flow, the information comprises one or more of:
primary service requirements and alternative service requirements ordered in a prioritized way;
an indication whether notification control is required in case of un-fulfillment/re-fulfilment of QoS;
an indication whether QoS sustainability analytics information is required; and information on user equipment, UE, measurements.

Embodiment 19. The first server (112) of Embodiment 17 wherein when QoS sustainability analytics information is required, the information further comprises one or more of:
key performance indicator, KPI, to be considered for generating QoS sustainability analytics.
a threshold for triggering notifications on QoS sustainability analytics; and in-advance time for triggering notifications on QoS sustainability analytics.

Embodiment 20. The first server (112) of any of Embodiments 14-19, wherein the memory includes further instructions that when executed by the processing circuitry (1203) causes the first server (112) to perform operations further comprising:
receiving (1305) a session-oriented service establish notification from the second server (114) indicating a session-oriented service has been established.

Embodiment 21. The first server (112) of any of Embodiments 14-20, further comprising:
transmitting (1401) a session-oriented service change trigger request to the second server (114), the session-oriented service change request comprising one or more updates to service information or a change in server information; and
receiving (1403) a session-oriented service change trigger response from the second server (114) indicating whether or not the second server (114) is able to continue the session-oriented service with updated session parameters.

Embodiment 22. The first server (112) of Embodiment 21, wherein the memory includes further instructions that when executed by the processing circuitry (1203) causes the first server (112) to perform operations further comprising:
receiving (1405) a session-oriented service change notification from the second server (114).

Embodiment 23. The first server (112) of any of Embodiments 14-20, wherein the memory includes further instructions that when executed by the processing circuitry (1203) causes the first server (112) to perform operations further comprising:
transmitting (1501) a session-oriented service termination trigger request to terminate the session-oriented service to the second server (114);
receiving (1503) a session-oriented service termination trigger response from the second server (114).

Embodiment 24. The first server (112) of Embodiment 23, wherein the memory includes further instructions that when executed by the processing circuitry (1203) causes the first server (112) to perform operations further comprising:
receiving (1505) a session-oriented service termination notification from the second server (114).

Embodiment 25. A computer program comprising program code to be executed by processing circuitry (1203) of a first server (112), whereby execution of the program code causes the first server (112) to perform operations according to any of Embodiments 1-11.

Embodiment 26. A computer program product comprising a non-transitory storage medium including program code to be executed by processing circuitry (1203) of a first server (112), whereby execution of the program code causes the first server (112) to perform operations according to any of Embodiments 1-11.

Embodiment 27. A method performed by a second server (114) communicatively connected to a network (108) for supporting session-oriented services for a vehicle, the method comprising:
receiving (1601) a session-oriented service trigger request from a first server (112) to initiate a session-oriented service for a client device (104); and
transmitting (1603) a session-oriented service trigger response to the first server (112) indicating whether or not the second server (114) has the ability to initiate a session-oriented service with the client device (104).

Embodiment 28. The method of Embodiment 27, wherein the first server is a vehicle to everything, V2X, application specific server and the second server is a V2X application enabler, VAE, server.

Embodiment 29. The method of any of Embodiments 27-28, wherein receiving the session-oriented service trigger request comprises receiving the session-oriented service trigger request with information associated with the session-oriented service.

Embodiment 30. The method of Embodiment 29, wherein the information comprises one or more of an identity of the client device (104), the identity of the first server (112), the identity of the service session, and a type or quality of service, QoS, requirement of the session-oriented service.

Embodiment The method of Embodiment 30, wherein information related to the type or QoS request comprises information on how many flows are associated to the session-oriented service, and for each flow, the information comprises one or more of:
primary service requirements and alternative service requirements ordered in a prioritized way;
an indication whether notification control is required in case of un-fulfillment/re-fulfilment of QoS;
an indication whether QoS sustainability analytics information is required; and information on user equipment, UE, measurements.

Embodiment 32. The method of Embodiment 31 wherein when QoS sustainability analytics information is required, the information further comprises one or more of:
key performance indicator, KPI, to be considered for generating QoS sustainability analytics;
a threshold for triggering notifications on QoS sustainability analytics; and in-advance time for triggering notifications on QoS sustainability analytics.

Embodiment 33. The method of any of Embodiments 27-32, further comprising:
transmitting (1605) a session-oriented service establish notification to the first server (112) indicating a session-oriented service has been established.

Embodiment 34. The method of any of Embodiments 27-33, further comprising:
transmitting (1701) a session-oriented service request to a client device (100) having a VAE client (104) to establish a session-oriented service, the session-oriented service request including an identity of the VAE client (104), an identity of the session, and a reporting configuration;
receiving (1703) a session-oriented service response from the client device (100) having the VAE client (104) indicating acceptance of the session oriented service request to establish the session-oriented service; and
responsive to receiving the session-oriented service response indicating acceptance, transmitting (1705) a session-oriented service establish notification to the first server (112).

Embodiment 35. The method of Embodiment 34, further comprising:
receiving (1801) a session-oriented service change trigger request from the first server (112) comprising an identity of the session-oriented service and updated session parameters;
responsive to determining that the session-oriented service can be provided with the updated session parameters; transmitting (1803) a session-oriented service change trigger response to the first server (112) indicating an ability to continue the session-oriented service with the updated session parameters; and
responsive to determining that the session-oriented service cannot be provided with the updated session parameters; transmitting (1805) a session-oriented service change trigger response to the first server (112) indicating the second server (114) is unable to continue the session-oriented service with the updated session parameters.

Embodiment 36. The method of Embodiment 35, further comprising:
transmitting (1901) a session-oriented change request to the client device (100) having the VAE client (104) comprising update requirements or a change of server information; and
receiving (1903) a session-oriented change response from the client device (100) having the VAE client (104) indicating acceptance of the change request; and transmitting (1905) a session-oriented service change notification to the first server (112).

Embodiment 37. The method of Embodiment 34, further comprising:
receiving (2001) a session-oriented service change request from the client device (100) having the VAE client (104), the session-oriented service change request comprising one or more updates to service information or a change in server information;
transmitting (2003) a session-oriented service change response to the client device (100) having the VAE client (104) indicating acceptance of the session-oriented service change request; and
transmitting (2005) a session-oriented service change notification to the first server (112).

Embodiment 38. The method of Embodiment 34, further comprising:
receiving (2101) a session-oriented service termination trigger request from the first server (112) to terminate the session-oriented service from the first server (112);
transmitting (2103) a session-oriented service termination trigger response to the first server (112); and
transmitting (2105) a session-oriented service termination notification to the first server (112).

Embodiment 39. The method of Embodiment 38, further comprising:
transmitting (2201) a session-oriented service termination request to the client device (100) having the VAE client (104); and
receiving (2203) a session-oriented service termination response from the client device (100) having the VAE client (104) indicating acceptance of the session termination request.

Embodiment 40. The method of Embodiment 34, further comprising:
receiving (2301) a session-oriented service termination request to terminate the session-oriented service from the client device (100) having the VAE client (104);
transmitting (2303) a session-oriented service termination response to the client device (100) having the VAE client (104) indicating acceptance of the session termination request; and
transmitting (2305) a session-oriented service termination notification to the first server (112).

Embodiment 41. A second server (114) adapted to perform operations comprising:
receiving (1601) a session-oriented service trigger request from a first server (112) to initiate a session-oriented service for a client device (104); and
transmitting (1603) a session-oriented service trigger response to the first server (112) indicating whether or not the second server (114) has an ability to a session-oriented service with the client device (104).

Embodiment 42. The second server (114) of Embodiment 41 wherein the first server (112) is adapted to perform operations according to any of Embodiments 28-40.

Embodiment 43. A second server (114) comprising:
processing circuitry (1103); and
memory (1105) coupled with the processing circuitry, wherein the memory includes instructions that when executed by the processing circuitry causes the second server (114) to perform operations comprising:
   receiving (1601) a session-oriented service trigger request from a first server (112) to initiate a session-oriented service for a client device (104); and
   transmitting (1603) a session-oriented service trigger response to the first server (112) indicating whether or not the second server (114) has an ability to initiate a session-oriented service with the client device (104).

Embodiment 44. The second server (114) of Embodiment 43 wherein the first server is a vehicle to everything, V2X, application specific server and the second server is a V2X application enabler, VAE, server.

Embodiment 45. The second server (114) of any of Embodiments 43-44, wherein in receiving the session-oriented service trigger request, the memory includes further instructions that when executed by the processing circuitry causes the second server (114) to perform operations comprising receiving the session-oriented service trigger request with information associated with the session-oriented service.

Embodiment 46. The second server (114) of Embodiment 45, wherein the information comprises one or more of an identity of the client device (104), the identity of the first server (112), the identity of the service session, and a type or quality of service, QoS, requirement of the session-oriented service.

Embodiment 47. The second server (114) of Embodiment 46, wherein information related to the type or QoS request comprises information on how many flows are associated to the session-oriented service, and for each flow, the information comprises one or more of:
primary service requirements and alternative service requirements ordered in a prioritized way;
an indication whether notification control is required in case of un-fulfillment/re-fulfilment of QoS;
an indication whether QoS sustainability analytics information is required; and information on user equipment, UE, measurements.

Embodiment 48. The second server (114) of Embodiment 47 wherein when QoS sustainability analytics information is required, the information further comprises one or more of:
key performance indicator, KPI, to be considered for generating QoS sustainability analytics.
a threshold for triggering notifications on QoS sustainability analytics; and in-advance time for triggering notifications on QoS sustainability analytics.

Embodiment 49. The second server (114) of any of Embodiments 43-48, wherein the memory includes further instructions that when executed by the processing circuitry causes the second server (114) to perform operations comprising:
transmitting (1605) a session-oriented service establish notification to the first server (112) indicating a session-oriented service has been established.

Embodiment 50. The second server (114) of any of Embodiments 43-47, wherein the memory includes further instructions that when executed by the processing circuitry causes the second server (114) to perform further operations comprising:
transmitting (1701) a session-oriented service request to a client device (100) having a VAE client (104) to establish a session-oriented service, the session-oriented service request including an identity of the VAE client (104), an identity of the session, and a reporting configuration;
receiving (1703) a session-oriented service response from the client device (100) having the VAE client (104) indicating acceptance of the session oriented service request to establish the session-oriented service; and
responsive to receiving the session-oriented service response indicating acceptance, transmitting (1705) a session-oriented service establish notification to the first server (112).

Embodiment 51. The second server (114) of Embodiment 50, wherein the memory includes further instructions that when executed by the processing circuitry causes the second server (114) to perform further operations comprising:
receiving (1801) a session-oriented service change trigger request from the first server (112) comprising an identity of the session-oriented service and updated session parameters;
responsive to determining that the session-oriented service can be provided with the updated session parameters; transmitting (1901) a session-oriented service change trigger response to the first server (112) indicating the ability to continue the session-oriented service with the updated session parameters; and
responsive to determining that the session-oriented service cannot be provided with the updated session parameters; transmitting (1903) a session-oriented service change trigger response to the first server (112) indicating the second server (114) is unable to continue the session-oriented service with the updated session parameters.

Embodiment 52. The second server (114) of Embodiment 51, wherein the memory includes further instructions that when executed by the processing circuitry causes the second server (114) to perform further operations comprising:
transmitting (1901) a change request to the client device (100) having the VAE client (104) comprising update requirements or a change of server information;
receiving (1903) a change response from the client device (100) having the VAE client (104) indicating acceptance of the change request; and
transmitting a session-oriented service change notification to the first server (112)

Embodiment 53. The second server (114) of Embodiment 50, wherein the memory includes further instructions that when executed by the processing circuitry causes the second server (114) to perform further operations comprising:
receiving (2001) a session-oriented service change request from the client device (100) having the VAE client (104), the session-oriented service update request comprising one or more updates to service information or a change in server information;
transmitting (2003) a change response to the client device (100) having the VAE client (104) indicating acceptance of the session-oriented service change request; and
transmitting (2005) a session-oriented service change notification to the first server (112).

Embodiment 54. The second server (114) of Embodiment 50, wherein the memory includes further instructions that when executed by the processing circuitry causes the second server (114) to perform further operations comprising:
receiving (2101) a session-oriented service termination trigger request to terminate the session-oriented service from the first server (112); and
transmitting (2103) a session-oriented service termination trigger response to the first server (112).

Embodiment 55. The second server (114) of Embodiment 54, wherein the memory includes further instructions that when executed by the processing circuitry causes the second server (114) to perform further operations comprising:
transmitting (2201) a session termination request to the client device (100) having the VAE client (104);
receiving (2203) a session termination response from the client device (100) having the VAE client (104) indicating acceptance of the session termination request; and
transmitting (2205) a session-oriented service termination notification to the first server (112).

Embodiment 55. The second server (114) of any of Embodiments 50-53, wherein the memory includes further instructions that when executed by the processing circuitry causes the second server (114) to perform further operations comprising:
receiving (2301) a session-oriented service termination request to terminate the session-oriented service from the client device (100) having the VAE client (104);
transmitting (2303) a session-oriented service termination response to the client device (100) having the VAE client (104) indicating acceptance of the session-oriented service termination request; and
transmitting (2305) a session-oriented service termination notification to the first server (112).

Embodiment 56. A computer program comprising program code to be executed by processing circuitry (1103) of a second server (114), whereby execution of the program code causes the second server (114) to perform operations according to any of Embodiments 27-40.

Embodiment 57. A computer program product comprising a non-transitory storage medium including program code to be executed by processing circuitry (1103) of a second server (114), whereby execution of the program code causes the second server (114) to perform operations according to any of Embodiments 27-40.

Embodiment 58. A method performed by a vehicle to everything, V2X, application enabler, VAE, client (104) of a computer device (100), the method comprising:
receiving (2401) a session-oriented service request from a second server (114), the session-oriented service request including an identity of the VAE client (104), an identity of a session, and a reporting configuration;
transmitting (2403) a session-oriented service response to the second server (114) indicating acceptance of the session-oriented service request; and
providing (2405) a session-oriented service establish notification to a V2X application-specific client (102).

Embodiment 59. The method of Embodiment 58, further comprising:
receiving (2501) a session-oriented service change request from the second server (114);
transmitting (2503) a session-oriented service change notification to the second server (114) indicating acceptance of the session-oriented service change request; and
providing (2505) a session-oriented service change notification to the V2X application-specific client (102).

Embodiment 60. The method of Embodiment 58, further comprising:
transmitting (2601) a session-oriented service change request to the second server (114), the session-oriented service change request comprising one or more updates to service information or a change in server information; and
receiving (2603) a session-oriented service change response from the second server (114) indicating acceptance of the session-oriented service change request.

Embodiment 61. The method of Embodiments 58, further comprising:
receiving (2701) a session-oriented service termination request from the second server (114);
transmitting (2703) a session-oriented service termination response to the second server (114) indicating acceptance of the session-oriented service termination request; and
providing (2705) a session-oriented service termination notification to the V2X application-specific client.

Embodiment 62. The method of any of Embodiments 58-60, further comprising:
transmitting (2801) a session-oriented service termination request to the second server (114); and
receiving (2803) a session-oriented service termination response from the second server (114) indicating acceptance of the session-oriented service termination request.

Embodiment 63. The method of Embodiment 62, wherein transmitting the session-oriented service termination request comprises transmitting the session-oriented service termination request responsive to receiving a session-oriented service termination trigger request from the V2X application-specific client.

Embodiment 64. A vehicle-to-everything, V2X application enabler, VAE, client (104) adapted to perform operations comprising:
receiving (2401) a session-oriented service request from a second server (114), the session-oriented service request including an identity of the VAE client (104), an identity of a session, and a reporting configuration;
transmitting (2403) a session-oriented service response to the second server (114) indicating approval of the session-oriented service request; and
providing (2405) a session-oriented service establish notification to a V2X application-specific client.

Embodiment 65. The VAE client (104) of Embodiment 64 wherein the VAE client (104) is adapted to perform operations according to any of Embodiments 59-63.

Embodiment 66. A vehicle-to-everything, V2X application enabler, VAE, client (104) comprising:
processing circuitry (1003); and
memory (1005) coupled with the processing circuitry, wherein the memory includes instructions that when executed by the processing circuitry causes the VAE client (104) to perform operations comprising:
   receiving (2401) a session-oriented service request from a second server (114), the session-oriented service request including an identity of the VAE client (104), and identity of a session, and a reporting configuration;
   transmitting (2403) a session-oriented service response to the second server (114) indicating approval of the session-oriented service request; and
   providing (2405) a session-oriented service establish notification to a V2X application-specific client.

Embodiment 67. The VAE client (104) of Embodiment 66, wherein the memory includes further instructions that when executed by the processing circuitry causes the VAE client (104) to perform further operations comprising:
receiving (2501) a session-oriented change request from the second server (114);
transmitting (2503) a session-oriented change notification to the second server (114) indicating acceptance of the session-oriented change request; and
providing (2505) a session-oriented service change notification to the V2X application-specific client (102).

Embodiment 68. The VAE client (104) of Embodiment 66, wherein the memory includes further instructions that when executed by the processing circuitry causes the VAE client (104) to perform further operations comprising:
transmitting (2601) a session-oriented service change request to the second server (114), the session-oriented service update request comprising one or more updates to service information or a change in server information; and
receiving (2603) a change response from the second server (114) indicating acceptance of the session-oriented service change request.

Embodiment 69. The VAE client (104) of any of Embodiment 66, wherein the memory includes further instructions that when executed by the processing circuitry causes the VAE client (104) to perform further operations comprising:
receiving (2701) a session-oriented service termination request from the second server (114);
transmitting (2703) a session-oriented service termination response to the second server (114) indicating approval of the session-oriented service termination request; and
providing (2705) a session-oriented service termination notification to the V2X application-specific client (102).

Embodiment 70. The VAE client (104) of Embodiment 66, wherein the memory includes further instructions that when executed by the processing circuitry causes the VAE client (104) to perform further operations comprising:
transmitting (2801) a session-oriented service termination request to the second server (114); and
receiving (2803) a session-oriented service termination response from the second server (114) indicating approval of the session-oriented service termination request.

Embodiment 71. The VAE client (104) of Embodiment 70, wherein transmitting the session-oriented service termination request comprises transmitting the session-oriented service termination request responsive to receiving a session-oriented termination trigger request from the V2X application-specific client (102).

Embodiment 72. A computer program comprising program code to be executed by processing circuitry (1003) of a vehicle-to-everything, V2X application enabler, VAE, client (104), whereby execution of the program code causes the VAE client (104) to perform operations according to any of Embodiments 58-63.

Embodiment 73. A computer program product comprising a non-transitory storage medium including program code to be executed by processing circuitry (1003) of a vehicle-to-everything, V2X application enabler, VAE, client (104), whereby execution of the program code causes the VAE client (104) to perform operations according to any of Embodiments 58-63.Explanations are provided below for various abbreviations/acronyms used in the present disclosure.

| Abbreviation | Explanation |
|---|---|
| 3GPP | 3rd Generation Partnership Project |
| 5G | 5th Generation |
| gNB | Base station in NR |
| ITS | Intelligent Transport Systems |
| ITS-S | ITS Station |
| KPI | Key Performance Indicator |
| NR | New Radio |
| QoS | Quality of Service |
| RAN | Radio Access Network |
| RAT | Radio Access Technology |
| RD | Remote driving |
| SEAL | Service Enable Architecture Layer |
| TeSo | Tele-operated support |
| ToD | Tele-operated driving |
| VAE | V2X Application Enabler |
| VAL | Vertical application layer |
| V2N | Vehicle to Network |
| V2X | Vehicle to everything |
| V2X AS | V2X application server |
| V2X UE | V2X User equipment |
| UE | User Equipment |

References are identified below.
1. 3GPP TS 23.286, Application layer support for V2X services; Functional architecture and information flows, V16.1.0, 06-2019.
2. 3GPP TS 23.434, Service Enabler Architecture Layer for Verticals; Functional architecture and information flows, V16.1.0, 06-2019.
3. 3GPP TR 23.795, Study on application layer support for V2X services, V16.0.0, Sept. 2018.
4. 3GPP TR 23.764, Study on enhancements to application layer support for V2X services, V0.5.0, February 2020.
5. 3GPP TR 22.886, Study on enhancement of 3GPP support for 5G V2X services, V16.2.0, December 2018.
6. 3GPP TS 22.186, Service requirements for enhanced V2X scenarios, V16.2.0, June 2019.
7. 5GAA T-190028, 5G Automotive Association; Working Group Use Cases and Technical Requirements; 5G Use Cases and Requirements - Wave 2.1; V1.0 (2019/01/30)
8. 5GAA XWG5-190009 Work Item Description, Requirements and architecture for Tele-operated Driving

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Figure 29 illustrates a wireless network in accordance with some embodiments.

Although the subject matter described herein may be implemented in any appropriate type of system using any suitable components, the embodiments disclosed herein are described in relation to a wireless network, such as the example wireless network illustrated in Figure 29. For simplicity, the wireless network of Figure 29 only depicts network 4106, network nodes 4160 and 4160b (also referred to as V2X server herein), and WDs 4110, 4110b, and 4110c (also referred to as mobile terminals, user equipment, V2X user equipment herein, and the like). In practice, a wireless network may further include any additional elements suitable to support communication between wireless devices or between a wireless device and another communication device, such as a landline telephone, a service provider, or any other network node or end device. Of the illustrated components, network node 4160 and wireless device (WD) 4110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Vehicle to Everything (V2X),and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 4106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 4160 and WD 4110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs), V2X servers (e.g., V2X application specific servers, V2X application enabler servers) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multistandard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), V2X server nodes, and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 29, network node 4160 includes processing circuitry 4170, device readable medium 4180, interface 4190, auxiliary equipment 4184, power source 4186, power circuitry 4187, and antenna 4162. Although network node 4160 illustrated in the example wireless network of Figure 29 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 4160 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 4160 may be composed of multiple physically separate components (e.g., a NodeB component and a RNC component, or a BTS component and a BSC component, etc.), which may each have their own respective components. In certain scenarios in which network node 4160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 4160 may be configured to support multiple radio access technologies (RATs). In such embodiments, some components may be duplicated (e.g., separate device readable medium 4180 for the different RATs) and some components may be reused (e.g., the same antenna 4162 may be shared by the RATs). Network node 4160 may also include multiple sets of the various illustrated components for different wireless technologies integrated into network node 4160, such as, for example, GSM, WCDMA, LTE, NR, WiFi, or Bluetooth wireless technologies. These wireless technologies may be integrated into the same or different chip or set of chips and other components within network node 4160.

Processing circuitry 4170 is configured to perform any determining, calculating, or similar operations (e.g., certain obtaining operations) described herein as being provided by a network node. These operations performed by processing circuitry 4170 may include processing information obtained by processing circuitry 4170 by, for example, converting the obtained information into other information, comparing the obtained information or converted information to information stored in the network node, and/or performing one or more operations based on the obtained information or converted information, and as a result of said processing making a determination.

Processing circuitry 4170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 4160 components, such as device readable medium 4180, network node 4160 functionality. For example, processing circuitry 4170 may execute instructions stored in device readable medium 4180 or in memory within processing circuitry 4170. Such functionality may include providing any of the various wireless features, functions, or benefits discussed herein. In some embodiments, processing circuitry 4170 may include a system on a chip (SOC).

In some embodiments, processing circuitry 4170 may include one or more of radio frequency (RF) transceiver circuitry 4172 and baseband processing circuitry 4174. In some embodiments, radio frequency (RF) transceiver circuitry 4172 and baseband processing circuitry 4174 may be on separate chips (or sets of chips), boards, or units, such as radio units and digital units. In alternative embodiments, part or all of RF transceiver circuitry 4172 and baseband processing circuitry 4174 may be on the same chip or set of chips, boards, or units

In certain embodiments, some or all of the functionality described herein as being provided by a network node, base station, eNB or other such network device may be performed by processing circuitry 4170 executing instructions stored on device readable medium 4180 or memory within processing circuitry 4170. In alternative embodiments, some or all of the functionality may be provided by processing circuitry 4170 without executing instructions stored on a separate or discrete device readable medium, such as in a hard-wired manner. In any of those embodiments, whether executing instructions stored on a device readable storage medium or not, processing circuitry 4170 can be configured to perform the described functionality. The benefits provided by such functionality are not limited to processing circuitry 4170 alone or to other components of network node 4160, but are enjoyed by network node 4160 as a whole, and/or by end users and the wireless network generally.

Device readable medium 4180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 4170. Device readable medium 4180 may store any suitable instructions, data or information, including a computer program, software, an application including one or more of logic, rules, code, tables, etc. and/or other instructions capable of being executed by processing circuitry 4170 and, utilized by network node 4160. Device readable medium 4180 may be used to store any calculations made by processing circuitry 4170 and/or any data received via interface 4190. In some embodiments, processing circuitry 4170 and device readable medium 4180 may be considered to be integrated.

Interface 4190 is used in the wired or wireless communication of signalling and/or data between network node 4160, network 4106, and/or WDs 4110. As illustrated, interface 4190 comprises port(s)/terminal(s) 4194 to send and receive data, for example to and from network 4106 over a wired connection. Interface 4190 also includes radio front end circuitry 4192 that may be coupled to, or in certain embodiments a part of, antenna 4162. Radio front end circuitry 4192 comprises filters 4198 and amplifiers 4196. Radio front end circuitry 4192 may be connected to antenna 4162 and processing circuitry 4170. Radio front end circuitry may be configured to condition signals communicated between antenna 4162 and processing circuitry 4170. Radio front end circuitry 4192 may receive digital data that is to be sent out to other network nodes or WDs via a wireless connection. Radio front end circuitry 4192 may convert the digital data into a radio signal having the appropriate channel and bandwidth parameters using a combination of filters 4198 and/or amplifiers 4196. The radio signal may then be transmitted via antenna 4162. Similarly, when receiving data, antenna 4162 may collect radio signals which are then converted into digital data by radio front end circuitry 4192. The digital data may be passed to processing circuitry 4170. In other embodiments, the interface may comprise different components and/or different combinations of components.

In certain alternative embodiments, network node 4160 may not include separate radio front end circuitry 4192, instead, processing circuitry 4170 may comprise radio front end circuitry and may be connected to antenna 4162 without separate radio front end circuitry 4192. Similarly, in some embodiments, all or some of RF transceiver circuitry 4172 may be considered a part of interface 4190. In still other embodiments, interface 4190 may include one or more ports or terminals 4194, radio front end circuitry 4192, and RF transceiver circuitry 4172, as part of a radio unit (not shown), and interface 4190 may communicate with baseband processing circuitry 4174, which is part of a digital unit (not shown).

Antenna 4162 may include one or more antennas, or antenna arrays, configured to send and/or receive wireless signals. Antenna 4162 may be coupled to radio front end circuitry 4192 and may be any type of antenna capable of transmitting and receiving data and/or signals wirelessly. In some embodiments, antenna 4162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 4162 may be separate from network node 4160 and may be connectable to network node 4160 through an interface or port.

Antenna 4162, interface 4190, and/or processing circuitry 4170 may be configured to perform any receiving operations and/or certain obtaining or transmitting operations described herein as being performed by a network node. Any information, data and/or signals may be received from a wireless device, another network node and/or any other network equipment. Similarly, antenna 4162, interface 4190, and/or processing circuitry 4170 may be configured to perform any transmitting operations described herein as being performed by a network node. Any information, data and/or signals may be transmitted to a wireless device, another network node and/or any other network equipment.

Power circuitry 4187 may comprise, or be coupled to, power management circuitry and is configured to supply the components of network node 4160 with power for performing the functionality described herein. Power circuitry 4187 may receive power from power source 4186. Power source 4186 and/or power circuitry 4187 may be configured to provide power to the various components of network node 4160 in a form suitable for the respective components (e.g., at a voltage and current level needed for each respective component). Power source 4186 may either be included in, or external to, power circuitry 4187 and/or network node 4160. For example, network node 4160 may be connectable to an external power source (e.g., an electricity outlet) via an input circuitry or interface such as an electrical cable, whereby the external power source supplies power to power circuitry 4187. As a further example, power source 4186 may comprise a source of power in the form of a battery or battery pack which is connected to, or integrated in, power circuitry 4187. The battery may provide backup power should the external power source fail. Other types of power sources, such as photovoltaic devices, may also be used.

Alternative embodiments of network node 4160 may include additional components beyond those shown in Figure 29 that may be responsible for providing certain aspects of the network node's functionality, including any of the functionality described herein and/or any functionality necessary to support the subject matter described herein. For example, network node 4160 may include user interface equipment to allow input of information into network node 4160 and to allow output of information from network node 4160. This may allow a user to perform diagnostic, maintenance, repair, and other administrative functions for network node 4160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, a V2X application enabler client, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 4110 includes antenna 4111, interface 4114, processing circuitry 4120, device readable medium 4130, user interface equipment 4132, auxiliary equipment 4134, power source 4136 and power circuitry 4137. WD 4110 may include multiple sets of one or more of the illustrated components for different wireless technologies supported by WD 4110, such as, for example, GSM, WCDMA, LTE, NR, WiFi, WiMAX, or Bluetooth wireless technologies, just to mention a few. These wireless technologies may be integrated into the same or different chips or set of chips as other components within WD 4110.

Antenna 4111 may include one or more antennas or antenna arrays, configured to send and/or receive wireless signals, and is connected to interface 4114. In certain alternative embodiments, antenna 4111 may be separate from WD 4110 and be connectable to WD 4110 through an interface or port. Antenna 4111, interface 4114, and/or processing circuitry 4120 may be configured to perform any receiving or transmitting operations described herein as being performed by a WD. Any information, data and/or signals may be received from a network node and/or another WD. In some embodiments, radio front end circuitry and/or antenna 4111 may be considered an interface.

As illustrated, interface 4114 comprises radio front end circuitry 4112 and antenna 4111. Radio front end circuitry 4112 comprise one or more filters 4118 and amplifiers 4116. Radio front end circuitry 4112 is connected to antenna 4111 and processing circuitry 4120, and is configured to condition signals communicated between antenna 4111 and processing circuitry 4120. Radio front end circuitry 4112 may be coupled to or a part of antenna 4111. In some embodiments, WD 4110 may not include separate radio front end circuitry 4112; rather, processing circuitry 4120 may comprise radio front end circuitry and may be connected to antenna 4111. Similarly, in some embodiments, some or all of RF transceiver circuitry 4122 may be considered a part of interface 4114. Radio front end circuitry 4112 may receive digital data that is to be sent out to other network nodes or WDs via a wireless connection. Radio front end circuitry 4112 may convert the digital data into a radio signal having the appropriate channel and bandwidth parameters using a combination of filters 4118 and/or amplifiers 4116. The radio signal may then be transmitted via antenna 4111. Similarly, when receiving data, antenna 4111 may collect radio signals which are then converted into digital data by radio front end circuitry 4112. The digital data may be passed to processing circuitry 4120. In other embodiments, the interface may comprise different components and/or different combinations of components.

Processing circuitry 4120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 4110 components, such as device readable medium 4130, WD 4110 functionality. Such functionality may include providing any of the various wireless features or benefits discussed herein. For example, processing circuitry 4120 may execute instructions stored in device readable medium 4130 or in memory within processing circuitry 4120 to provide the functionality disclosed herein.

As illustrated, processing circuitry 4120 includes one or more of RF transceiver circuitry 4122, baseband processing circuitry 4124, and application processing circuitry 4126. In other embodiments, the processing circuitry may comprise different components and/or different combinations of components. In certain embodiments processing circuitry 4120 of WD 4110 may comprise a SOC. In some embodiments, RF transceiver circuitry 4122, baseband processing circuitry 4124, and application processing circuitry 4126 may be on separate chips or sets of chips. In alternative embodiments, part or all of baseband processing circuitry 4124 and application processing circuitry 4126 may be combined into one chip or set of chips, and RF transceiver circuitry 4122 may be on a separate chip or set of chips. In still alternative embodiments, part or all of RF transceiver circuitry 4122 and baseband processing circuitry 4124 may be on the same chip or set of chips, and application processing circuitry 4126 may be on a separate chip or set of chips. In yet other alternative embodiments, part or all of RF transceiver circuitry 4122, baseband processing circuitry 4124, and application processing circuitry 4126 may be combined in the same chip or set of chips. In some embodiments, RF transceiver circuitry 4122 may be a part of interface 4114. RF transceiver circuitry 4122 may condition RF signals for processing circuitry 4120.

In certain embodiments, some or all of the functionality described herein as being performed by a WD may be provided by processing circuitry 4120 executing instructions stored on device readable medium 4130, which in certain embodiments may be a computer-readable storage medium. In alternative embodiments, some or all of the functionality may be provided by processing circuitry 4120 without executing instructions stored on a separate or discrete device readable storage medium, such as in a hard-wired manner. In any of those particular embodiments, whether executing instructions stored on a device readable storage medium or not, processing circuitry 4120 can be configured to perform the described functionality. The benefits provided by such functionality are not limited to processing circuitry 4120 alone or to other components of WD 4110, but are enjoyed by WD 4110 as a whole, and/or by end users and the wireless network generally.

Processing circuitry 4120 may be configured to perform any determining, calculating, or similar operations (e.g., certain obtaining operations) described herein as being performed by a WD. These operations, as performed by processing circuitry 4120, may include processing information obtained by processing circuitry 4120 by, for example, converting the obtained information into other information, comparing the obtained information or converted information to information stored by WD 4110, and/or performing one or more operations based on the obtained information or converted information, and as a result of said processing making a determination.

Device readable medium 4130 may be operable to store a computer program, software, an application including one or more of logic, rules, code, tables, etc. and/or other instructions capable of being executed by processing circuitry 4120. Device readable medium 4130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 4120. In some embodiments, processing circuitry 4120 and device readable medium 4130 may be considered to be integrated.

User interface equipment 4132 may provide components that allow for a human user to interact with WD 4110. Such interaction may be of many forms, such as visual, audial, tactile, etc. User interface equipment 4132 may be operable to produce output to the user and to allow the user to provide input to WD 4110. The type of interaction may vary depending on the type of user interface equipment 4132 installed in WD 4110. For example, if WD 4110 is a smart phone, the interaction may be via a touch screen; if WD 4110 is a smart meter, the interaction may be through a screen that provides usage (e.g., the number of gallons used) or a speaker that provides an audible alert (e.g., if smoke is detected). User interface equipment 4132 may include input interfaces, devices and circuits, and output interfaces, devices and circuits. User interface equipment 4132 is configured to allow input of information into WD 4110, and is connected to processing circuitry 4120 to allow processing circuitry 4120 to process the input information. User interface equipment 4132 may include, for example, a microphone, a proximity or other sensor, keys/buttons, a touch display, one or more cameras, a USB port, or other input circuitry. User interface equipment 4132 is also configured to allow output of information from WD 4110, and to allow processing circuitry 4120 to output information from WD 4110. User interface equipment 4132 may include, for example, a speaker, a display, vibrating circuitry, a USB port, a headphone interface, or other output circuitry. Using one or more input and output interfaces, devices, and circuits, of user interface equipment 4132, WD 4110 may communicate with end users and/or the wireless network, and allow them to benefit from the functionality described herein.

Auxiliary equipment 4134 is operable to provide more specific functionality which may not be generally performed by WDs. This may comprise specialized sensors for doing measurements for various purposes, interfaces for additional types of communication such as wired communications etc. The inclusion and type of components of auxiliary equipment 4134 may vary depending on the embodiment and/or scenario.

Power source 4136 may, in some embodiments, be in the form of a battery or battery pack. Other types of power sources, such as an external power source (e.g., an electricity outlet), photovoltaic devices or power cells, may also be used. WD 4110 may further comprise power circuitry 4137 for delivering power from power source 4136 to the various parts of WD 4110 which need power from power source 4136 to carry out any functionality described or indicated herein. Power circuitry 4137 may in certain embodiments comprise power management circuitry. Power circuitry 4137 may additionally or alternatively be operable to receive power from an external power source; in which case WD 4110 may be connectable to the external power source (such as an electricity outlet) via input circuitry or an interface such as an electrical power cable. Power circuitry 4137 may also in certain embodiments be operable to deliver power from an external power source to power source 4136. This may be, for example, for the charging of power source 4136. Power circuitry 4137 may perform any formatting, converting, or other modification to the power from power source 4136 to make the power suitable for the respective components of WD 4110 to which power is supplied.

Figure 30 illustrates a user Equipment in accordance with some embodiments.

Figure 30 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 42200 may be any UE identified by the 3rd Generation Partnership Project (3GPP), including a NB-IoT UE, a machine type communication (MTC) UE, and/or an enhanced MTC (eMTC) UE. UE 4200, as illustrated in Figure 30, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 30 is a UE, the components discussed herein are equally applicable to a WD, and vice-versa.

In Figure 30, UE 4200 includes processing circuitry 4201 that is operatively coupled to input/output interface 4205, radio frequency (RF) interface 4209, network connection interface 4211, memory 4215 including random access memory (RAM) 4217, read-only memory (ROM) 4219, and storage medium 4221 or the like, communication subsystem 4231, power source 4213, and/or any other component, or any combination thereof. Storage medium 4221 includes operating system 4223, application program 4225, and data 4227. In other embodiments, storage medium 4221 may include other similar types of information. Certain UEs may utilize all of the components shown in Figure 30, or only a subset of the components. The level of integration between the components may vary from one UE to another UE. Further, certain UEs may contain multiple instances of a component, such as multiple processors, memories, transceivers, transmitters, receivers, etc.

In Figure 30, processing circuitry 4201 may be configured to process computer instructions and data. Processing circuitry 4201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 4201 may include two central processing units (CPUs). Data may be information in a form suitable for use by a computer.

In the depicted embodiment, input/output interface 4205 may be configured to provide a communication interface to an input device, output device, or input and output device. UE 4200 may be configured to use an output device via input/output interface 4205. An output device may use the same type of interface port as an input device. For example, a USB port may be used to provide input to and output from UE 4200. The output device may be a speaker, a sound card, a video card, a display, a monitor, a printer, an actuator, an emitter, a smartcard, another output device, or any combination thereof. UE 4200 may be configured to use an input device via input/output interface 4205 to allow a user to capture information into UE 4200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 30, RF interface 4209 may be configured to provide a communication interface to RF components such as a transmitter, a receiver, and an antenna. Network connection interface 4211 may be configured to provide a communication interface to network 4243a. Network 4243a may encompass wired and/or wireless networks such as a local-area network (LAN), a wide-area network (WAN), a computer network, a wireless network, a telecommunications network, another like network or any combination thereof. For example, network 4243a may comprise a Wi-Fi network. Network connection interface 4211 may be configured to include a receiver and a transmitter interface used to communicate with one or more other devices over a communication network according to one or more communication protocols, such as Ethernet, TCP/IP, SONET, ATM, or the like. Network connection interface 4211 may implement receiver and transmitter functionality appropriate to the communication network links (e.g., optical, electrical, and the like). The transmitter and receiver functions may share circuit components, software or firmware, or alternatively may be implemented separately.

RAM 4217 may be configured to interface via bus 4202 to processing circuitry 4201 to provide storage or caching of data or computer instructions during the execution of software programs such as the operating system, application programs, and device drivers. ROM 4219 may be configured to provide computer instructions or data to processing circuitry 4201. For example, ROM 4219 may be configured to store invariant low-level system code or data for basic system functions such as basic input and output (I/O), startup, or reception of keystrokes from a keyboard that are stored in a non-volatile memory. Storage medium 4221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 4221 may be configured to include operating system 4223, application program 4225 such as a web browser application, a widget or gadget engine or another application, and data file 4227. Storage medium 4221 may store, for use by UE 4200, any of a variety of various operating systems or combinations of operating systems.

Storage medium 4221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 4221 may allow UE 4200 to access computer-executable instructions, application programs or the like, stored on transitory or non-transitory memory media, to offload data, or to upload data. An article of manufacture, such as one utilizing a communication system may be tangibly embodied in storage medium 4221, which may comprise a device readable medium.

In Figure 30, processing circuitry 4201 may be configured to communicate with network 4243b using communication subsystem 4231. Network 4243a and network 4243b may be the same network or networks or different network or networks. Communication subsystem 4231 may be configured to include one or more transceivers used to communicate with network 4243b. For example, communication subsystem 4231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 4233 and/or receiver 4235 to implement transmitter or receiver functionality, respectively, appropriate to the RAN links (e.g., frequency allocations and the like). Further, transmitter 4233 and receiver 4235 of each transceiver may share circuit components, software or firmware, or alternatively may be implemented separately.

In the illustrated embodiment, the communication functions of communication subsystem 4231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 4231 may include cellular communication, Wi-Fi communication, Bluetooth communication, and GPS communication. Network 4243b may encompass wired and/or wireless networks such as a local-area network (LAN), a wide-area network (WAN), a computer network, a wireless network, a telecommunications network, another like network or any combination thereof. For example, network 4243b may be a cellular network, a Wi-Fi network, and/or a near-field network. Power source 4213 may be configured to provide alternating current (AC) or direct current (DC) power to components of UE 4200.

The features, benefits and/or functions described herein may be implemented in one of the components of UE 4200 or partitioned across multiple components of UE 4200. Further, the features, benefits, and/or functions described herein may be implemented in any combination of hardware, software or firmware. In one example, communication subsystem 4231 may be configured to include any of the components described herein. Further, processing circuitry 4201 may be configured to communicate with any of such components over bus 4202. In another example, any of such components may be represented by program instructions stored in memory that when executed by processing circuitry 4201 perform the corresponding functions described herein. In another example, the functionality of any of such components may be partitioned between processing circuitry 4201 and communication subsystem 4231. In another example, the non-computationally intensive functions of any of such components may be implemented in software or firmware and the computationally intensive functions may be implemented in hardware.

Figure 31 illustrates a virtualization environment in accordance with some embodiments.

Figure 31 is a schematic block diagram illustrating a virtualization environment 4300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 4300 hosted by one or more of hardware nodes 4330. Further, in embodiments in which the virtual node is not a radio access node or does not require radio connectivity (e.g., a core network node), then the network node may be entirely virtualized.

The functions may be implemented by one or more applications 4320 (which may alternatively be called software instances, virtual appliances, network functions, virtual nodes, virtual network functions, etc.) operative to implement some of the features, functions, and/or benefits of some of the embodiments disclosed herein. Applications 4320 are run in virtualization environment 4300 which provides hardware 4330 comprising processing circuitry 4360 and memory 4390. Memory 4390 contains instructions 4395 executable by processing circuitry 4360 whereby application 4320 is operative to provide one or more of the features, benefits, and/or functions disclosed herein.

Virtualization environment 4300, comprises general-purpose or special-purpose network hardware devices 4330 comprising a set of one or more processors or processing circuitry 4360, which may be commercial off-the-shelf (COTS) processors, dedicated Application Specific Integrated Circuits (ASICs), or any other type of processing circuitry including digital or analog hardware components or special purpose processors. Each hardware device may comprise memory 4390-1 which may be non-persistent memory for temporarily storing instructions 4395 or software executed by processing circuitry 4360. Each hardware device may comprise one or more network interface controllers (NICs) 4370, also known as network interface cards, which include physical network interface 4380. Each hardware device may also include non-transitory, persistent, machine-readable storage media 4390-2 having stored therein software 4395 and/or instructions executable by processing circuitry 4360. Software 4395 may include any type of software including software for instantiating one or more virtualization layers 4350 (also referred to as hypervisors), software to execute virtual machines 4340 as well as software allowing it to execute functions, features and/or benefits described in relation with some embodiments described herein.

Virtual machines 4340 comprise virtual processing, virtual memory, virtual networking or interface and virtual storage, and may be run by a corresponding virtualization layer 4350 or hypervisor. Different embodiments of the instance of virtual appliance 4320 may be implemented on one or more of virtual machines 4340, and the implementations may be made in different ways.

During operation, processing circuitry 4360 executes software 4395 to instantiate the hypervisor or virtualization layer 4350, which may sometimes be referred to as a virtual machine monitor (VMM). Virtualization layer 4350 may present a virtual operating platform that appears like networking hardware to virtual machine 4340.

As shown in Figure 31, hardware 4330 may be a standalone network node with generic or specific components. Hardware 4330 may comprise antenna 43225 and may implement some functions via virtualization. Alternatively, hardware 4330 may be part of a larger cluster of hardware (e.g. such as in a data center or customer premise equipment (CPE)) where many hardware nodes work together and are managed via management and orchestration (MANO) 43100, which, among others, oversees lifecycle management of applications 4320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 4340 may be a software implementation of a physical machine that runs programs as if they were executing on a physical, non-virtualized machine. Each of virtual machines 4340, and that part of hardware 4330 that executes that virtual machine, be it hardware dedicated to that virtual machine and/or hardware shared by that virtual machine with others of the virtual machines 4340, forms a separate virtual network elements (VNE).

Still in the context of NFV, Virtual Network Function (VNF) is responsible for handling specific network functions that run in one or more virtual machines 4340 on top of hardware networking infrastructure 4330 and corresponds to application 4320 in Figure 31.

In some embodiments, one or more radio units 43200 that each include one or more transmitters 43220 and one or more receivers 43210 may be coupled to one or more antennas 43225. Radio units 43200 may communicate directly with hardware nodes 4330 via one or more appropriate network interfaces and may be used in combination with the virtual components to provide a virtual node with radio capabilities, such as a radio access node or a base station.

In some embodiments, some signalling can be effected with the use of control system 43230 which may alternatively be used for communication between the hardware nodes 4330 and radio units 43200.

Figure 32 illustrates a telecommunication network connected via an intermediate network to a host computer in accordance with some embodiments.

With reference to Figure 32, in accordance with an embodiment, a communication system includes telecommunication network 4410, such as a 3GPP-type cellular network, which comprises access network 4411, such as a radio access network, and core network 4414. Access network 4411 comprises a plurality of base stations 4412a, 4412b, 4412c, such as NBs, eNBs, gNBs or other types of wireless access points, each defining a corresponding coverage area 4413a, 4413b, 4413c. Each base station 4412a, 4412b, 4412c is connectable to core network 4414 over a wired or wireless connection 4415. A first UE 4491 located in coverage area 4413c is configured to wirelessly connect to, or be paged by, the corresponding base station 4412c. A second UE 4492 in coverage area 4413a is wirelessly connectable to the corresponding base station 4412a. While a plurality of UEs 4491, 4492 are illustrated in this example, the disclosed embodiments are equally applicable to a situation where a sole UE is in the coverage area or where a sole UE is connecting to the corresponding base station 4412.

Telecommunication network 4410 is itself connected to host computer 4430, which may be embodied in the hardware and/or software of a standalone server, a cloud-implemented server, a distributed server or as processing resources in a server farm. Host computer 4430 may be under the ownership or control of a service provider, or may be operated by the service provider or on behalf of the service provider. Connections 4421 and 4422 between telecommunication network 4410 and host computer 4430 may extend directly from core network 4414 to host computer 4430 or may go via an optional intermediate network 4420. Intermediate network 4420 may be one of, or a combination of more than one of, a public, private or hosted network; intermediate network 4420, if any, may be a backbone network or the Internet; in particular, intermediate network 4420 may comprise two or more sub-networks (not shown).

The communication system of Figure 32 as a whole enables connectivity between the connected UEs 4491, 4492 and host computer 4430. The connectivity may be described as an over-the-top (OTT) connection 4450. Host computer 4430 and the connected UEs 4491, 4492 are configured to communicate data and/or signaling via OTT connection 4450, using access network 4411, core network 4414, any intermediate network 4420 and possible further infrastructure (not shown) as intermediaries. OTT connection 4450 may be transparent in the sense that the participating communication devices through which OTT connection 4450 passes are unaware of routing of uplink and downlink communications. For example, base station 4412 may not or need not be informed about the past routing of an incoming downlink communication with data originating from host computer 4430 to be forwarded (e.g., handed over) to a connected UE 4491. Similarly, base station 4412 need not be aware of the future routing of an outgoing uplink communication originating from the UE 4491 towards the host computer 4430.

Figure 33 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 33. In communication system 4500, host computer 4510 comprises hardware 4515 including communication interface 4516 configured to set up and maintain a wired or wireless connection with an interface of a different communication device of communication system 4500. Host computer 4510 further comprises processing circuitry 4518, which may have storage and/or processing capabilities. In particular, processing circuitry 4518 may comprise one or more programmable processors, application-specific integrated circuits, field programmable gate arrays or combinations of these (not shown) adapted to execute instructions. Host computer 4510 further comprises software 4511, which is stored in or accessible by host computer 4510 and executable by processing circuitry 4518. Software 4511 includes host application 4512. Host application 4512 may be operable to provide a service to a remote user, such as UE 4530 connecting via OTT connection 4550 terminating at UE 4530 and host computer 4510. In providing the service to the remote user, host application 4512 may provide user data which is transmitted using OTT connection 4550.

Communication system 4500 further includes base station 4520 provided in a telecommunication system and comprising hardware 4525 enabling it to communicate with host computer 4510 and with UE 4530. Hardware 4525 may include communication interface 4526 for setting up and maintaining a wired or wireless connection with an interface of a different communication device of communication system 4500, as well as radio interface 4527 for setting up and maintaining at least wireless connection 4570 with UE 4530 located in a coverage area (not shown in Figure 33) served by base station 4520. Communication interface 4526 may be configured to facilitate connection 4560 to host computer 4510. Connection 4560 may be direct or it may pass through a core network (not shown in Figure 33) of the telecommunication system and/or through one or more intermediate networks outside the telecommunication system. In the embodiment shown, hardware 4525 of base station 4520 further includes processing circuitry 4528, which may comprise one or more programmable processors, application-specific integrated circuits, field programmable gate arrays or combinations of these (not shown) adapted to execute instructions. Base station 4520 further has software 4521 stored internally or accessible via an external connection.

Communication system 4500 further includes UE 4530 already referred to. Its hardware 4535 may include radio interface 4537 configured to set up and maintain wireless connection 4570 with a base station serving a coverage area in which UE 4530 is currently located. Hardware 4535 of UE 4530 further includes processing circuitry 4538, which may comprise one or more programmable processors, application-specific integrated circuits, field programmable gate arrays or combinations of these (not shown) adapted to execute instructions. UE 4530 further comprises software 4531, which is stored in or accessible by UE 4530 and executable by processing circuitry 4538. Software 4531 includes client application 4532. Client application 4532 may be operable to provide a service to a human or non-human user via UE 4530, with the support of host computer 4510. In host computer 4510, an executing host application 4512 may communicate with the executing client application 4532 via OTT connection 4550 terminating at UE 4530 and host computer 4510. In providing the service to the user, client application 4532 may receive request data from host application 4512 and provide user data in response to the request data. OTT connection 4550 may transfer both the request data and the user data. Client application 4532 may interact with the user to generate the user data that it provides.

It is noted that host computer 4510, base station 4520 and UE 4530 illustrated in Figure 33 may be similar or identical to host computer 4430, one of base stations 4412a, 4412b, 4412c and one of UEs 4491, 4492 of Figure 32, respectively. This is to say, the inner workings of these entities may be as shown in Figure 33 and independently, the surrounding network topology may be that of Figure 32.

In Figure 33, OTT connection 4550 has been drawn abstractly to illustrate the communication between host computer 4510 and UE 4530 via base station 4520, without explicit reference to any intermediary devices and the precise routing of messages via these devices. Network infrastructure may determine the routing, which it may be configured to hide from UE 4530 or from the service provider operating host computer 4510, or both. While OTT connection 4550 is active, the network infrastructure may further take decisions by which it dynamically changes the routing (e.g., on the basis of load balancing consideration or reconfiguration of the network).

Wireless connection 4570 between UE 4530 and base station 4520 is in accordance with the teachings of the embodiments described throughout this disclosure. One or more of the various embodiments may improve the performance of OTT services provided to UE 4530 using OTT connection 4550, in which wireless connection 4570 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 4550 between host computer 4510 and UE 4530, in response to variations in the measurement results. The measurement procedure and/or the network functionality for reconfiguring OTT connection 4550 may be implemented in software 4511 and hardware 4515 of host computer 4510 or in software 4531 and hardware 4535 of UE 4530, or both. In embodiments, sensors (not shown) may be deployed in or in association with communication devices through which OTT connection 4550 passes; the sensors may participate in the measurement procedure by supplying values of the monitored quantities exemplified above, or supplying values of other physical quantities from which software 4511, 4531 may compute or estimate the monitored quantities. The reconfiguring of OTT connection 4550 may include message format, retransmission settings, preferred routing etc.; the reconfiguring need not affect base station 4520, and it may be unknown or imperceptible to base station 4520. Such procedures and functionalities may be known and practiced in the art. In certain embodiments, measurements may involve proprietary UE signaling facilitating host computer 4510's measurements of throughput, propagation times, latency and the like. The measurements may be implemented in that software 4511 and 4531 causes messages to be transmitted, in particular empty or 'dummy' messages, using OTT connection 4550 while it monitors propagation times, errors etc.

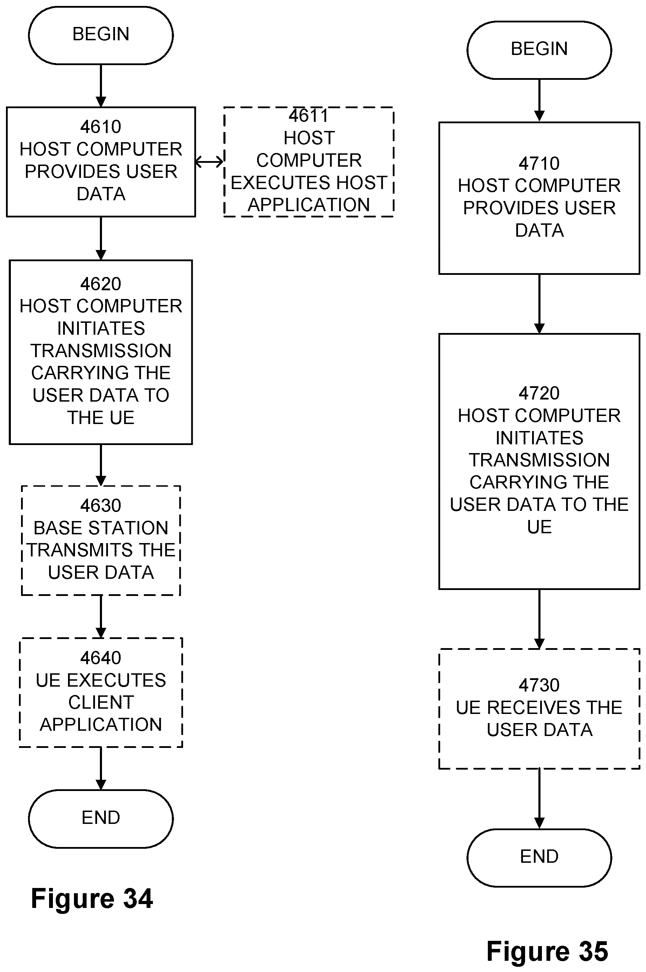

Figure 34 illustrates methods implemented in a communication system including a host computer, a base station and a user equipment in accordance with some embodiments

Figure 34 is a flowchart illustrating a method implemented in a communication system, in accordance with one embodiment. The communication system includes a host computer, a base station and a UE which may be those described with reference to Figures 32 and 33. For simplicity of the present disclosure, only drawing references to Figure 34 will be included in this section. In step 4610, the host computer provides user data. In substep 4611 (which may be optional) of step 4610, the host computer provides the user data by executing a host application. In step 4620, the host computer initiates a transmission carrying the user data to the UE. In step 4630 (which may be optional), the base station transmits to the UE the user data which was carried in the transmission that the host computer initiated, in accordance with the teachings of the embodiments described throughout this disclosure. In step 4640 (which may also be optional), the UE executes a client application associated with the host application executed by the host computer.

Figure 35 illustrates methods implemented in a communication system including a host computer, a base station and a user equipment in accordance with some embodiments.

Figure 35 is a flowchart illustrating a method implemented in a communication system, in accordance with one embodiment. The communication system includes a host computer, a base station and a UE which may be those described with reference to Figures 32 and 33. For simplicity of the present disclosure, only drawing references to Figure 35 will be included in this section. In step 4710 of the method, the host computer provides user data. In an optional substep (not shown) the host computer provides the user data by executing a host application. In step 4720, the host computer initiates a transmission carrying the user data to the UE. The transmission may pass via the base station, in accordance with the teachings of the embodiments described throughout this disclosure. In step 4730 (which may be optional), the UE receives the user data carried in the transmission.

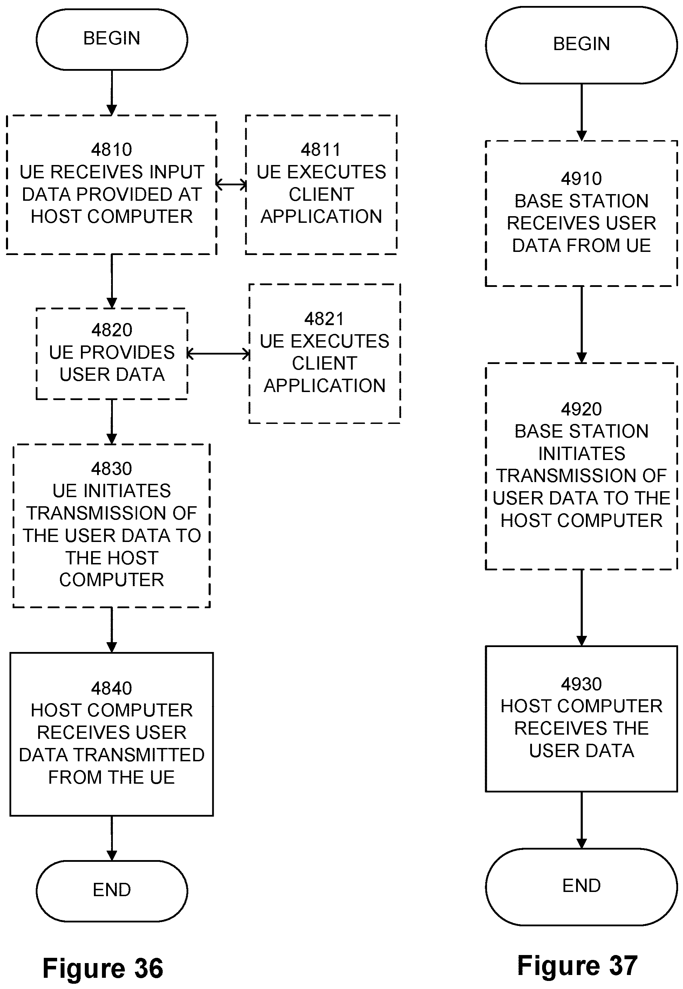

Figure 36 illustrates methods implemented in a communication system including a host computer, a base station and a user equipment in accordance with some embodiments

Figure 36 is a flowchart illustrating a method implemented in a communication system, in accordance with one embodiment. The communication system includes a host computer, a base station and a UE which may be those described with reference to Figures 32 and 33. For simplicity of the present disclosure, only drawing references to Figure 36 will be included in this section. In step 4810 (which may be optional), the UE receives input data provided by the host computer. Additionally or alternatively, in step 4820, the UE provides user data. In substep 4821 (which may be optional) of step 4820, the UE provides the user data by executing a client application. In substep 4811 (which may be optional) of step 4810, the UE executes a client application which provides the user data in reaction to the received input data provided by the host computer. In providing the user data, the executed client application may further consider user input received from the user. Regardless of the specific manner in which the user data was provided, the UE initiates, in substep 4830 (which may be optional), transmission of the user data to the host computer. In step 4840 of the method, the host computer receives the user data transmitted from the UE, in accordance with the teachings of the embodiments described throughout this disclosure.

Figure 37 illustrates methods implemented in a communication system including a host computer, a base station and a user equipment in accordance with some embodiments

Figure 37 is a flowchart illustrating a method implemented in a communication system, in accordance with one embodiment. The communication system includes a host computer, a base station and a UE which may be those described with reference to Figures 32 and 33. For simplicity of the present disclosure, only drawing references to Figure 37 will be included in this section. In step 4910 (which may be optional), in accordance with the teachings of the embodiments described throughout this disclosure, the base station receives user data from the UE. In step 4920 (which may be optional), the base station initiates transmission of the received user data to the host computer. In step 4930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

## Claims

1. A method performed by a vehicle to everything, V2X, application specific server (112) for supporting session-oriented service updates for a vehicle, the method comprising:
transmitting (1401) a session-oriented service change trigger request to a V2X application enabler, VAE, server (114), the session-oriented service change trigger request comprising the identity of a session of the session-oriented service and an update of QoS requirements of the session; and
receiving (1403) a session-oriented service change trigger response from the VAE server (114) indicating whether or not the VAE server (114) is able to continue the session-oriented service with the updated QoS requirements.

2. The method of claim 1, further comprising:
transmitting (1301), prior to a session-oriented service update, a session-oriented service trigger request to the VAE server (114) to initiate a session-oriented service for a VAE client (104) of a V2X user equipment (100);
receiving (1303) a session-oriented service trigger response from the VAE server (114) indicating whether or not the VAE server (114) has an ability to initiate a session-oriented service with the VAE client (104).

3. The method of claim 2, wherein transmitting the session-oriented service trigger request comprises transmitting the session-oriented service trigger request with information associated with the session-oriented service, wherein the information comprises one or more of an identity of the VAE client (104), the identity of the V2X application specific server (112), the identity of the session, and a type or quality of service, QoS, requirement of the session-oriented service.

4. The method of any of the claims 1 to 3, further comprising:
transmitting (1501) a session-oriented service termination trigger request to terminate the session-oriented service to the VAE server (114);
receiving (1503) a session-oriented service termination trigger response from the VAE server (114).

5. A method performed by a vehicle to everything, V2X, application enabler, VAE, server (114) for supporting session-oriented service updates for a vehicle, the method comprising:
receiving (1801) a session-oriented service change trigger request from a V2X application specific server (112), the session-oriented service change trigger request comprising the identity of a session of the session-oriented service and an update of QoS requirements of the session; and
transmitting (1803) a session-oriented service change trigger response to the V2X application specific server (112) indicating whether or not the VAE server (114) is able to continue the session-oriented service with the updated QoS requirements.

6. The method of claim 5, further comprising:
receiving (1601), prior to a session-oriented service update, a session-oriented service trigger request from a V2X application specific server (112) to initiate a session-oriented service for a VAE client (104) of a V2X user equipment (100);
transmitting (1603) a session-oriented service trigger response to the V2X application specific server (112) indicating whether or not the VAE server (114) has the ability to initiate a session-oriented service with the VAE client (104).

7. The method of claim 6, wherein receiving the session-oriented service trigger request comprises receiving the session-oriented service trigger request with information associated with the session-oriented service, wherein the information comprises one or more of an identity of the VAE client (104), the identity of the V2X application specific server (112), the identity of the session, and a type or quality of service, QoS, requirement of the session-oriented service.

8. The method of claim 6 or 7, further comprising:
transmitting (1701) a session-oriented service request to the VAE client (104) to establish the session-oriented service, the session-oriented service request including an identity of the VAE client (104), the identity of the session, and a reporting configuration;
receiving (1703) a session-oriented service response from the VAE client (104) indicating acceptance of the session-oriented service request to establish the session-oriented service; and
transmitting (1705) a session-oriented service establish notification to the V2X application specific server (112).

9. The method of any of the claims 5 to 8, further comprising:
transmitting (1901) a session-oriented change request to the VAE client (104) comprising update requirements or a change of server information; and
receiving (1903) a session-oriented change response from the VAE client (104) indicating acceptance of the change request; and
transmitting (1905) a session-oriented service change notification to the V2X application specific server (112).

10. The method of any of the claims 5 to 9, further comprising:
receiving (2101) a session-oriented service termination trigger request from the V2X application specific server (112) to terminate the session-oriented service from the V2X application specific server (112); and
transmitting (2103) a session-oriented service termination trigger response to the V2X application specific server (112).

11. The method of claim 10, further comprising:
transmitting (2201) a session-oriented service termination request to the VAE client (104); and
receiving (2203) a session-oriented service termination response from the VAE client (104) indicating acceptance of the session termination request; and
transmitting (2205) a session-oriented service termination notification to the V2X application specific server (112).

12. A vehicle to everything, V2X. application specific server (112) adapted to perform operations according to any of the claims 1 to 4.

13. A computer program comprising program code to be executed by processing circuitry (1203) of a vehicle to everything, V2X, application specific server (112), whereby execution of the program code causes the V2X application specific server (112) to perform operations according to any of the claims 1 to 4.

14. A vehicle to everything, V2X, application enabler, VAE, server (114) adapted to perform operations according to any of the claims 4 to 11.

15. A computer program comprising program code to be executed by processing circuitry (1103) of a vehicle to everything, V2X, application enabler, VAE, server (114), whereby execution of the program code causes the VAE server (114) to perform operations according to any of the claims 4 to 11.
